# EUROPEAN PATENT APPLICATION

(11) **EP 1 864 924 A1**
(43) Date of publication of application: **12.12.2007**
(21) Application number: 06730303.2
(22) Date of filing: 28.03.2006
(51) Int. Cl.: B65G 67/00, B65G 57/03

(54) **STOWAGE INFORMATION CREATING DEVICE, STOWAGE INFORMATION CREATING METHOD USING SAME, METHOD OF LADING CARGO IN TRANSPORT CONTAINER, DISTRIBUTION MANAGEMENT SYSTEM, COMPUTER-READABLE STORAGE MEDIUM USED FOR THEM, AND PROGRAM**

(30) Priority: 28.03.2005 JP 2005092195
(71) Applicant: Toyota Steel Center Co., Ltd., Tokai-shi, Aichi 476-8533 (JP)
(72) Inventor: TSURUTA, Koichi, c/o TOYOTA STEEL CENTER CO., LTD., Tokai-shi, Aichi 476-0005 (JP); MATSUMOTO, Manabu, c/o TOYOTA STEEL CENTER CO. LTD, Tokai-shi, Aichi 476-0005 (JP)
(74) Representative: TBK-Patent
(86) International application number: PCT/JP2006/306355
(87) International publication number: WO 2006/114969

(57) **Abstract**

A stowage data preparation device is provided which can reduce transportation costs by improving the goods per shipping receptacle loading efficiency regardless of worker proficiency, and which permits transportation costs and schedules to be determined accurately at an early stage, and enables systematically planned transportation of shipping receptacles (especially containers of various kinds). A stowage data preparation device 1 includes: a pallet determination unit 2a determining a pallet P to be used per shipping receptacle, based on goods W to be stowed; a goods-stowed pallet display unit 2b displaying a goods-stowed pallet PW per shipping receptacle, by performing simulation of stowing goods onto a pallet determined by the pallet determination unit on a screen of a display device 3; and a stowage instruction data preparation unit 2c preparing stowage instruction data related to the goods-stowed pallet per shipping receptacle displayed by the goods-stowed pallet display unit.

## Description

### [TECHNICAL FIELD]

The present invention relates to a stowage data preparation device, a stowage data preparation method, method for conveying goods into shipping receptacles, and distribution management system that utilize such device, and a computer-readable memory medium and program that utilize these.
More particularly, the present invention relates to a stowage data preparation device, a stowage data preparation method, method for conveying goods into shipping receptacles, and distribution management system utilizing such device, and a computer-readable memory medium and program utilizing these items, all of which will reduce transportation costs by improving the goods per shipping receptacle loading efficiency regardless of worker proficiency, permit transportation costs and schedules to be determined accurately at an early stage, and enable systematically planned transportation of shipping receptacles (especially containers of various kinds).

### [BACKGROUND ART]

In container transportation it has long been common practice to pack the goods to be transported in wooden crates, load the packed goods into containers, and transport the containers by land or sea, etc.
With such method however, there are the problems that since wooden crates are employed, large quantities of wood must be used, and the wooden crates themselves are extremely costly; also, manufacturing, breaking up and disposing of the wooden crates consume time and expense, so that the overall transportation costs rise sharply. Particularly when import regulations require wooden items to undergo insect-proofing (fumigation, etc.) or require documents to be prepared that state the history of wooden items, and in similar cases, excessive treatment or preparation costs will be incurred.
In order to solve the above problems, a method has been developed in which pallets that are standardized (modularized) for containers are employed instead of wooden crates, the goods are stowed onto such pallets, and the pallets with the goods stowed thereon are loaded into containers (a process also called "vanning") which are then transported.

But even with such techniques, the work of stowing goods onto pallets is carried out by human labor, and moreover it is problematic to correct or alter the stowed arrangement of the goods once the stowing operation is complete, so that depending on the proficiency of the workers, the goods per container loading efficiency may be impaired, or the work may take prolonged periods of time. Especially when numerous types of goods having different shapes are stowed, the stowing work is extremely troublesome and time-consuming, and preparing the stowage members required for such work (such as square timbers, rushing belts and crates) also takes time. Further, when the containers are transported, the position of their center of gravity, which should preferably be within a certain range, is left to the intuition of the workers and thus is in danger of straying outside that range, depending on the workers' levels of skill.
Also, it is only when the stowing work is approximately complete that details of the actual work such as the total number of containers, the duration of the stowing operation, and the types of stowage members used, are known and can be used as a basis for calculating the transportation costs. Thus, there are problems such as that, depending on how the stowing work proceeds, the actual transportation costs may differ greatly from the initial projections, the time and labor for the work may be more than initially anticipated, and drastic changes in the transportation schedule may be required.
Further, goods are usually delivered to transportation terminals in large quantities all at once, so that extensive stocking space must be secured and high internal interest expenses on inventories and similar costs incurred, besides which, the task of sorting out goods to be transported from among large quantities of stock can be troublesome. Particularly when goods to be transported are located in the inner parts of an extensive stocking space, it is necessary to move the goods at the outer parts out of the way in order to retrieve the goods from the inner parts. This entails a great deal of handling of the goods and can lead to degradation of their quality. Due to the foregoing difficulties, there has arisen a desire for methods that can deliver the goods required, in precisely the quantities required, within a short time-frame.
What is more, with such practice of the related art, acquisition of data on the goods' shapes is left to the human hand, and as a result, it is difficult to obtain accurate shape data speedily.

Also, in the case of long-distance transportation requiring extended periods of several days or weeks, transportation hindrances are liable to occur during the long length of time from the request for transportation up to the actual arrival of the goods, sometimes resulting in delays. As a result, the factory or other recipient has to assure flexibility in its stocking, which incurs costs such as interest on inventories and so on. Yet no special consideration is given to such extended-period transportation in the distribution management systems of the related art.

Moreover, in the case of transportation overseas, documentation required for customs clearance, etc., must be prepared, and in the related art practice such documentation is copied from other documentation, sometimes by handwriting. This is bothersome, and errors may occur in the copying.
Furthermore, in the case when used pallets are returned in order to avoid the costs that would result from their remaining at a destination (such as customs duties and storage expenses) the documentation to be submitted for their passage through customs, etc., must be faultlessly prepared.

In the related art, a stowing method is known in which simulation of stowage of goods onto pallets is performed on the screen of a display device so that stowing operations can be deliberated in advance (see for example, Patent Documents 1 and 2 below).
However, the object of Patent Documents 1 and 2 is to improve the stowing efficiency of goods of a particular shape on pallets, which means that the goods per container loading efficiency cannot be improved simply by employing the methods set forth therein. More precisely, when numerous types of goods having different shapes are stowed, such methods will improve the goods per pallet stowing efficiency, but may not much improve the loading efficiency when considered at the level of individual containers loaded with the pallets.
Also, Patent Documents 1 and 2 do not disclose any proposals for the various problems described above relating to stowing operations and container transportation, nor any means of resolving such problems.

Patent Document 1: Japanese Patent Application Publication No. JP-A-2003-335416
Patent Document 2: Japanese Patent Application Publication No. JP-A-H11-130263

### [DISCLOSUER OF THE INVENTION]

### [PROBLEMS TO BE SOLVED BY THE INVENTION]

An advantage of some aspects of the present invention is to provide a stowage data preparation device, along with a stowage data preparation method, a method for conveying goods into shipping receptacles, and a distribution management system utilizing such device, as well as a computer-readable memory medium and a program utilizing these items, all of which will reduce transportation costs by improving the goods per shipping receptacle loading efficiency regardless of worker proficiency, permit transportation costs and schedules to be determined accurately at an early stage, and enable systematically planned transportation of shipping receptacles.

### [MEANS FOR SOLVING PROBLEM]

The present invention is described as follows.
1. A stowage data preparation device comprising:
   a pallet determination unit determining a pallet to be used per shipping receptacle, based on goods to be stowed;
   a goods-stowed pallet display unit displaying a goods-stowed pallet per shipping receptacle, by performing simulation of stowing goods onto the pallet determined by the pallet determination unit, on a screen of a display device; and
   a stowage instruction data preparation unit preparing stowage instruction data related to the goods-stowed pallet per shipping receptacle, displayed by the goods-stowed pallet display unit.
2. The stowage data preparation device according to 1 above, wherein the goods-stowed pallet display unit displays a two-dimensional (2D) and/or three-dimensional (3D) images of the goods-stowed pallet per shipping receptacle, and a stowage member used for the goods-stowed pallet per shipping receptacle, on the screen of the display device, and the stowage instruction data preparation unit prepares stowage instruction data including the 2D and/or 3D images of the goods-stowed pallet per shipping receptacle, and the stowage member.
3. The stowage data preparation device according to 2 above, wherein the goods-stowed pallet display unit displays identification data of a pallet, goods and a stowage member used for the goods-stowed pallet per shipping receptacle on the screen of the display device, and the stowage instruction data preparation unit prepares the stowage instruction data further including the identification data of the pallet, goods and stowage member.
4. The stowage data preparation device according to 3 above, further comprising:
   a stowing work duration calculation unit calculating duration of stowing work of the goods-stowed pallet per shipping receptacle based on the identification data of the pallet, goods and the stowage member used for the goods-stowed pallet per shipping receptacle, displayed by the goods-stowed pallet display unit.
5. The stowage data preparation device according to 4 above, further comprising:
   a stowage costs calculation unit calculating stowage costs of the goods-stowed pallet per shipping receptacle based on the identification data of the pallet, goods and stowage member used for the goods-stowed pallet per shipping receptacle displayed by the goods-stowed pallet display unit, and the duration of the stowing work calculated by the stowing work duration calculation unit.
6. The stowage data preparation device according to 3 above, wherein the stowage instruction data preparation unit prepares the stowage instruction data further including data on a conveying direction of the goods-stowed pallet per shipping receptacle into a shipping receptacle.
7. The stowage data preparation device according to 3 above, further comprising:
   a center-of-gravity position calculation unit calculating a position of the center of gravity of the goods-stowed pallet per shipping receptacle and/or per pallet based on the identification data of the pallet, goods and stowage member used for the goods-stowed pallet per shipping receptacle, displayed by the goods-stowed pallet display unit.
8. The stowage data preparation device according to 7 above, further comprising:
   a center-of-gravity abnormality notification unit notifying abnormality when the position of the center of gravity of the goods-stowed pallet per shipping receptacle calculated by the center-of-gravity position calculation unit exceeds a predetermined range.
9. The stowage data preparation device according to 7 above, further comprising:
   a center-of-gravity abnormality correction data production unit producing correction data for correcting the center-of-gravity abnormality, when the position of the center of gravity of the goods-stowed pallet per shipping receptacle calculated by the center-of-gravity position calculation unit exceeds a predetermined range.
10. The stowage data preparation device according to 3 above, further comprising:
   a weight and volume calculation unit calculating a gross weight and/or volume of the goods-stowed pallet per shipping receptacle based on the identification data of the pallet, goods and stowage member used for the goods-stowed pallet per shipping receptacle, displayed by the goods-stowed pallet display unit.
11. The stowage data preparation device according to 10 above, further comprising:
   a weight and volume abnormality notification unit notifying abnormality when the gross weight and/or volume of the goods-stowed pallet per shipping receptacle calculated by the weight and volume calculation unit exceeds a predetermined range.
12. The stowage data preparation device according to 11 above, further comprising:
   a weight and volume abnormality correction data production unit producing correction data for correcting the weight and volume abnormality, when the gross weight and/or volume of the goods-stowed pallet per shipping receptacle calculated by the weight and volume calculation unit exceeds a predetermined range.
13. The stowage data preparation device according to 1 above, further comprising:
   a stowage instruction data storage unit storing the stowage instruction data prepared by the stowage instruction data preparation unit.
14. The stowage data preparation device according to 13 above, further comprising:
   a documentation preparation unit preparing documentation required for transporting a shipping receptacle, based on the stowage instruction data stored by the stowage instruction data storage unit.
15. The stowage data preparation device according to 1 above, further comprising:
   an identification data storage unit storing identification data of goods to be stowed; and
   a goods selection unit selecting goods to be stowed, based on the identification data stored by the identification data storage unit.
16. The stowage data preparation device according to 1 above, further comprising:
   an identification data measurement unit measuring identification data of goods to be stowed.
17. The stowage data preparation device according to 1, above wherein the pallet is standardized for a shipping receptacle.
18. A stowage data preparation method utilizing a stowage data preparation device, the method comprising:
   determining a pallet to be used per shipping receptacle, based on goods to be stowed;
   displaying a goods-stowed pallet per shipping receptacle, by performing simulation of stowing goods onto the pallet determined by the pallet determination unit on a screen of a display device; and
   preparing stowage instruction data related to the goods-stowed pallet per shipping receptacle displayed by the goods-stowed pallet display unit.
19. A method for conveying goods into shipping receptacle, the method further comprising:
   performing an actual stowing operation of goods onto a pallet, based on the stowage instruction data prepared by the stowage data preparation device according to 1 above; and
   conveying a goods-stowed pallet per shipping receptacle stowed by such operation into a shipping receptacle all at once.
20. A distribution management system comprising:
   terminals each provided to a plurality of distribution bases; and
   a server computer connected to the terminals via a network;
   the server computer comprising:
      a pallet determination unit determining a pallet to be used per shipping receptacle, based on goods to be stowed;
      a goods-stowed pallet display unit displaying a goods-stowed pallet per shipping receptacle, by performing simulation of stowing goods onto the pallet determined by the pallet determination unit on a screen of a display device;
      a stowage instruction data preparation unit preparing stowage instruction data related to the goods-stowed pallet per shipping receptacle, displayed by the goods-stowed pallet display unit; and
      a stowage instruction data transmission unit transmitting the stowage instruction data prepared by the stowage instruction data preparation unit to the terminals;
   the terminals each comprising:
      a stowage instruction data display unit receiving and displaying the stowage instruction data transmitted by the stowage instruction data transmission unit.
21. The distribution management system according to 20 above, wherein
   the terminals each further comprising:
   a distribution data transmission unit transmitting distribution status data including identification data of goods to be distributed, and position data of distribution bases to the server computer;
   the server computer further comprising:
   a distribution data storage unit receiving and storing the distribution status data transmitted from the distribution data transmission unit;
   a distribution data process unit processing the distribution status data stored by the distribution data storage unit; and
   a processed result display unit displaying a processed result by the distribution data process unit.
22. The distribution management system according to 21 above, wherein the server computer further comprising:
   a receiving abnormality notification unit notifying an abnormality related to goods reception, based on the processed result by the distribution data process unit.
23. The distribution management system according to 21 above, wherein the server computer further comprising:
   a stowage instruction data storage unit storing the stowage instruction data prepared by the stowage instruction data preparation unit; and
   a documentation preparation unit preparing documentation required for transporting a shipping receptacle, based on the stowage instruction data stored in the stowage instruction data storage unit, and the distribution status data stored in the distribution data storage unit.
24. The distribution management system according to 21 above, wherein the server computer further comprising:
   a distribution period calculation unit calculating a distribution period of goods being distributed between the respective distribution bases;
   a stock data calculation unit calculating stock data of goods of a consignee, based on the distribution status data stored by the distribution data storage unit; and
   a supply plan preparation unit preparing a supply plan to supply goods to the consignee so that an amount of stock held by the consignee stays within a predetermined range, based on the distribution period calculated by the distribution period calculation unit, and the stock data calculated by the stock data calculation unit.
25. The distribution management system according to 21 above, wherein the server computer further comprising:
   a reference data transmission unit receiving a reference demand signal transmitted from the terminals, and transmitting the processed result by the distribution data process unit to the terminals, corresponding to the reference demand signal.
26. The distribution management system according to 20 above, wherein the server computer further comprising:
   a pallet data storage unit storing pallet data including a usage history and a present position of the pallet determined by the pallet determination unit.
27. The distribution management system according to 20 above, wherein the terminals each further comprising:
   an identification data measurement unit measuring identification data of goods to be stowed.
28. A computer-readable memory medium storing a program for causing a computer to operate as the stowage data preparation device according to 1 above.
29. A program for causing a computer to operate as the stowage data preparation device according to 1 above.
30. A computer-readable memory medium storing a program for causing a computer to operate as the distribution management system according to 20 above.
31. A program for causing a computer to operate as the distribution management system according to 20 above.

### [EFFECTS OF THE INVENTION]

According to the stowage data preparation device of the present invention, a pallet to be used per shipping receptacle is determined based on goods to be stowed. Then, simulation of stowing goods onto such determined pallet is performed on a screen of a display device. In the simulation of stowage, a goods-stowed pallet per shipping receptacle is displayed on the screen of the display device. Stowage instruction data is prepared based on such displayed goods-stowed pallet per shipping receptacle. Accordingly, actual stowing operation is performed by a worker based on such prepared stowage instruction data.
As described above, the actual stowing operation is performed by repeating the simulation of stowing goods onto the pallet to be used per shipping receptacle, and based on the accurate stowage instruction data obtained from the result thereof. Therefore, a loading efficiency of the goods into the shipping receptacle may be improved regardless of worker proficiency, and the stowing operation may be performed according to a planned schedule, even if the numerous types of goods having different shapes are stowed. Also, the total number of shipping receptacles, required stowage members, duration of stowing work, etc., may be grasped at an early stage, thereby enabling to calculate accurate transportation costs. An optimum vanning schedule and a delivery schedule may also be planned. By planning the delivery schedule so that the goods required may be delivered in precisely the quantities required within a short time frame, it is possible to save a storage space of the goods of a shipping side such as a manufacturer, and a receiving side such as a distribution center. The costs may also be reduced. Particularly, a storage management according to a shipping time of received goods may be realized, thereby enabling to further save the storage space. As a result, planned shipping receptacle transportation may be realized.

In the case when the goods-stowed pallet display unit displays 2D and/or 3D images of the goods-stowed pallet per shipping receptacle, and stowage members used for the goods-stowed pallet per shipping receptacle on the screen of the display device, and the stowage instruction data preparation unit prepares the stowage instruction data including the 2D and/or 3D images of the goods-stowed pallet per shipping receptacle and the stowage members, it is possible for a worker to adequately examine the stowing position, a procedure, etc., of the goods and the stowage members for the pallets, and also to easily recognize the contents of stowing instructions related thereto. The quantities of the goods-stowed pallets, i.e., the total number of shipping receptacles, may be grasped, thereby enabling to grasp more accurate transportation costs.
In the case when the goods-stowed pallet display unit displays identification data of the pallets, the goods and the stowage members used for the goods-stowed pallet per shipping receptacle, and the stowage instruction data preparation unit prepares the stowage instruction data further including the identification data of the pallets, the goods and the stowage members, it is possible to accurately grasp the types, weights, quantities, etc., of the pallets, the goods and the stowage members, thereby enabling to grasp more accurate transportation costs.
In the case when the device further includes a stowing work duration calculation unit, it is possible to grasp the durations of stowing work of the goods-stowed pallet per shipping receptacle, thereby enabling to prepare more planned stowing work schedule.
In the case when the device further includes a stowage cost calculation unit, a stowage costs of the goods-stowed pallet per shipping receptacle may be grasped, thereby enabling to grasp more accurate transportation costs.
In addition, in the case when the stowage instruction data preparation unit prepares a stowage instruction data further including duration of the stowing work of the goods-stowed pallet per shipping receptacle calculated based on the identification data of the pallets, the goods and the stowage members, it is possible for the worker to perform planned stowing operation. Accordingly, duration of the stowing work may be grasped, thereby enabling to grasp more accurate transportation costs.
In the case when the stowage instruction data preparation unit prepares stowage instruction data further including data on a conveying direction of the goods-stowed pallet per shipping receptacle into the shipping receptacle, it is possible to perform the conveying operation of the goods-stowed pallet into the shipping receptacle with more certainty.
In the case when the device further includes a center-of-gravity position calculation unit, by displaying the center-of-gravity position of the goods-stowed pallet per shipping receptacle, it is possible to easily check whether the position of the center of gravity of the shipping receptacle is within an appropriate range or not. On the other hand, by displaying the center of gravity of the goods-stowed pallet per pallet, it is possible to safely transfer the goods-stowed pallet by using a loading unit (such as a forklift).
In the case when the device further includes a center-of-gravity abnormality notification unit, it is possible to prevent the position of the center of gravity of the shipping receptacle from exceeding a predetermined range with more certainty
In the case when the device further includes a center-of-gravity abnormality correction production unit, it is possible to perform correction processing for the center-of-gravity abnormality with ease.
In the case when the device further includes a weight and volume calculation unit, it is possible to grasp the transportation cost of the goods with a relatively large weight based on the gross weight, and on the other hand, it is possible to grasp the transportation cost of the goods with a relatively small weight based on the volume.
In the case when the device further includes a weight and volume abnormality notification unit, it is possible to prevent the gross weight and/or volume of the shipping receptacle from exceeding a predetermined range with more certainty.
In the case when the device further includes a weight and volume abnormality correction production unit, it is possible to perform correction processing for the weight and volume abnormality with ease.
In the case when the device further includes a stowage instruction data storage unit, it is possible to reuse the stowage instruction data stored when a stowage pattern is approximately the same, thereby enabling to keep the simulation of stowage to a minimum.
In the case when the device further includes a documentation preparation unit, it is possible to prepare the documentation required for customs clearance, etc., at the same time, thereby enabling to prevent errors occurring in the copying, etc., and saves trouble of preparing the documentation.
In the case when the device further includes an identification data storage unit and a goods selection unit, it is possible to select the goods to be stowed from a vast amount of goods with ease.
In the case when the device further includes an identification data measurement unit, it is possible to measure and acquire the shapes, weights, centers of gravity, etc., of the goods with ease.
In the case when the pallet is standardized for the shipping receptacles, it is possible to keep the troublesome fixing work etc., of the goods in the shipping receptacle to a minimum, and to prepare goods before conveying operation in advance, thereby enabling to realize more efficient conveying operation of goods.

According to the stowage data preparation method of the present invention, a pallet to be used per shipping receptacle is determined based on goods to be stowed. Then, simulation of stowing goods onto such determined pallet is performed on a screen of a display device. In the simulation of stowage, a goods-stowed pallet per shipping receptacle is displayed on the screen of the display device. Stowage instruction data is prepared based on such displayed goods-stowed pallet per shipping receptacle. Accordingly, actual stowing operation is performed by a worker based on such prepared stowage instruction data.
As described above, the actual stowing operation is performed by repeating the simulation of stowing goods onto the pallet to be used per shipping receptacle, and based on the accurate stowage instruction data obtained from the result thereof. Therefore, a loading efficiency of the goods into the shipping receptacle may be improved regardless of worker proficiency, and the stowing operation may be performed according to a planned schedule, even if the numerous types of goods having different shapes are stowed. Also, the total number of shipping receptacles, required stowage members, duration of stowing work, etc., may be grasped at an early stage, thereby enabling to calculate accurate transportation costs. An optimum vanning schedule and a delivery schedule may also be planned. By planning the delivery schedule so that the goods required may be delivered in precisely the quantities required within a short time frame, it is possible to save a storage space of the goods of a shipping side such as a manufacturer, and a receiving side such as a distribution center. The costs may also be reduced. Particularly, a storage management according to a shipping time of received goods may be realized, thereby enabling to further save the storage space. As a result, planned shipping receptacle transportation may be realized.

According to the method for conveying goods into shipping receptacles of the present invention, actual stowing operation of the goods onto the pallets is performed, based on the stowage instruction data prepared by the above stowage data preparation device. The goods-stowed pallet per shipping receptacle stowed by such operation is conveyed into the shipping receptacle all at once. Accordingly, it is possible to efficiently perform the conveying operation of the goods into shipping receptacles at the distribution center etc., handling large amount of goods.

According to the distribution management system of the present invention, a pallet to be used per shipping receptacle is determined based on goods to be stowed. Then, simulation of stowing goods onto such determined pallet is performed on a screen of a display device. In the simulation of stowage, a goods-stowed pallet per shipping receptacle is displayed on the screen of the display device. Stowage instruction data is prepared based on such displayed goods-stowed pallet per shipping receptacle. Thus prepared stowage instruction data is transmitted to the terminal, and on the other hand, the terminal receives and displays the stowage instruction data transmitted by the stowage instruction data transmission unit. Accordingly, actual stowing operation is performed by a worker based on such displayed stowage instruction data at the respective distribution bases.
As described above, the actual stowing operation is performed by repeating the simulation of stowing goods onto the pallet to be used per shipping receptacle, and based on the accurate stowage instruction data obtained from the result thereof. Therefore, a loading efficiency of the goods into the shipping receptacle may be improved regardless of worker proficiency, and the stowing operation may be performed according to a planned schedule, even if the numerous types of goods having different shapes are stowed. Also, the total number of shipping receptacles, required stowage members, duration of stowing work, etc., may be grasped at an early stage, thereby enabling to calculate accurate transportation costs. An optimum vanning schedule and a delivery schedule may also be planned. By planning the delivery schedule so that the goods required may be delivered in precisely the quantities required within a short time frame, it is possible to save a storage space of the goods of a shipping side such as a manufacturer, and a receiving side such as a distribution center. The costs may also be reduced. Particularly, a storage management according to a shipping time of received goods may be realized, thereby enabling to further save the storage space. As a result, planned shipping receptacle transportation may be realized.
In the case when the terminal includes a distribution data transmission unit, and the server computer includes a distribution data storage unit, a distribution data process unit, and a processed result display unit, it is possible to grasp the distribution status of the shipping receptacles and the goods, thereby enabling to perform preferable distribution management. Particularly, by utilizing the distribution data process unit and the processed result display unit, it is possible to display the progress status indicating in which distribution base a special type of goods in distribution are held, etc., as a list. Also, it is possible to display detailed data of the goods held in any one of the distribution bases, etc. Further, by managing receiving data, product data, etc., of the goods in advance, and by updating the receiving data, storage data, the product data, etc., in real time, abnormality such as delay in receiving, may be grasped with ease.

In the case when the server computer further includes a stowage instruction data storage unit and a documentation preparation unit, it is possible to prepare the documentation required for customs clearance, etc., at the same time, thereby enabling to prevent errors occurring in the copying, etc., and saves trouble of preparing the documentation.
In the case when the server computer includes a receiving abnormality detection unit, it is possible to grasp the receiving abnormality such as delay in receiving etc., with more certainty.
In the case when the server computer includes a distribution period calculation unit, a stock data calculation unit, and a supply plan preparation unit, by utilizing the distribution period calculation unit, it is possible to obtain a period of the goods being distributed between the respective distribution bases, thereby enabling to obtain necessary data for improving the distribution period. Also, by utilizing such data, it is possible to reduce the stock held by the consignee, shorten the distribution period, and reduce the distribution costs. Also, by utilizing the stock data calculation unit, it is possible to prepare shipping plan of the goods that enables to maintain the stock held by the consignee in an appropriate amount. Also, it is possible to grasp the number of days required for distribution with ease, thereby enabling to adjust the number of shipment according to the stock status of the consignee. Accordingly, it is possible to maintain the stock held by the consignee to a minimum, thereby enabling to manage the stock with ease. Also, by reducing the warehouse storing the stock, it is possible to reduce the cost for warehouse management and land etc.
In the case when the server computer includes a reference data transmission unit, it is possible to grasp the product details and the current position of the goods, enabling to grasp the distribution status with ease.
In the case when the server computer includes a pallet data storage unit, it is possible to store a present position and a usage history of the pallet individually, thereby enabling to manage pallets preferably. Also, it is possible to prevent damage or stagnation of pallets.
In the case when the terminal further includes an identification data measurement unit, it is possible to measure and acquire identification data of the goods such as shapes, weights, and the centers of gravity etc., at each distribution base with ease.

According to the computer-readable memory medium of the present invention, it is possible to cause a computer to preferably operate as the above stowage data preparation device.
According to the program of the present invention, it is possible to cause a computer to preferably operate as the above stowage data preparation device.
According to another computer-readable memory medium of the present invention, it is possible to cause a computer to preferably operate as the above distribution management system.
According to another program of the present invention, it is possible to cause a computer to preferably operate as the above distribution management system.

### [BRIEF DESCRIPTION OF THE DRAWINGS]

FIG. 1 is an illustration showing a stowage data preparation device in accordance with an example of the present invention;
FIG. 2 is a block diagram showing the stowage data preparation device;
FIG. 3 is an illustration showing one example of a displayed image of a simulation of stowage;
FIG. 4 is an enlarged view of a substantial part of FIG. 3;
FIG. 5 is an enlarged view of a substantial part of FIG. 3;
FIG. 6 is an illustration showing another example of the displayed image of the simulation of stowage;
FIG. 7 is an illustration showing further another example of the displayed image of the simulation of stowage;
FIG. 8 is an enlarged view of a substantial part of FIG. 7;
FIG. 9 is an illustration showing one example of the displayed image of another simulation of stowage;
FIG. 10 is an illustration showing another example of the displayed image of the simulation of stowage;
FIG. 11 is an illustration showing further another example of the displayed image of the simulation of stowage;
FIG. 12 is an illustration showing further another example of the displayed image of the simulation of stowage;
FIG. 13 is an illustration showing one example of goods;
FIG. 14 is an illustration showing one example of the displayed image of the simulation of stowage;
FIG. 15 is an illustration showing another example of the displayed image of the simulation of stowage;
FIG. 16 is an illustration showing further another example of the displayed image of the simulation of stowage;
FIG. 17 is an illustration showing further another example of the displayed image of the simulation of stowage;
FIG. 18 is a perspective view showing a carriage in accordance with the example of the present invention;
FIG. 19 is a longitudinal sectional view showing a lifted state of the carriage;
FIG. 20 is a longitudinal sectional view showing a lowered state of the carriage;
FIG. 21 is an illustration showing a conveying action of the carriage;
FIG. 22 is an illustration showing the conveying action of the carriage;
FIG. 23 is an illustration showing the conveying action of the carriage;
FIG. 24 is an illustration showing the conveying action of the carriage;
FIG. 25 is an illustration showing the conveying action of the carriage;
FIG. 26 is an illustration showing the conveying action of the carriage;
FIG. 27 is a side view of a conveying device in accordance with the example of the present invention;
FIG. 28 is a perspective view of arrow A of FIG. 27;
FIG. 29 is a perspective view of an elevating/sliding device;
FIG. 30 is a longitudinal sectional view showing a lifted state of the elevating/sliding device;
FIG. 31 is a longitudinal sectional view showing a lowered state of the elevating/sliding device;
FIG. 32 is an illustration showing a conveying action of the conveying device;
FIG. 33 is an illustration showing the conveying action of the conveying device;
FIG. 34 is schematic diagram showing a distribution management system in accordance with the example of the present invention;
FIG. 35 is a block diagram showing the distribution management system;
FIG. 36 is a block diagram showing a server computer;
FIG. 37 is a block diagram showing a terminal;
FIG. 38 is a block diagram showing handling of goods at each distribution base;
FIG. 39 is a block diagram showing handling of pallets at each distribution base;
FIG. 40 is an illustration showing one example of a container cargo conveying slip;
FIG. 41 is an illustration showing one example of a container load cargo certification of content;
FIG. 42 is an illustration showing one example of a packing list;
FIG. 43 is an illustration showing one example of a displayed image of a product item progress status inquiry;
FIG. 44 is an illustration showing another example of the displayed image of the product item progress status inquiry;
FIG. 45 is an illustration showing one example of a displayed image of a vanning progress status inquiry;
FIG. 46 is an illustration showing another example of the displayed image of the vanning progress status inquiry;
FIG. 47 is an illustration showing one example of a displayed image of a content list of a container per ship;
FIG. 48 is an illustration showing an example output of a stock performance and a stock prediction of goods;
FIG. 49 is a graph showing an example of calculated statistics of a distribution period;
FIG. 50 is an illustration showing a distribution period calculation method;
FIG. 51 is an illustration showing a container ship leaving schedule;
FIG. 52 is an illustration showing a consignee's operating date;
FIG. 53 is an illustration showing a distribution period calculation method;
FIG. 54 is an illustration showing another distribution management system;
FIG. 55 is an illustration showing a dry container as a shipping receptacle; and
FIG. 56 is an illustration showing a truck bed as a shipping receptacle.

### [DESCRIPTION OF REFERENCE NUMERALS AND SIGNS]

1; stowage data preparation device, 2; computer, 2a; pallet determination unit, 2b; goods-stowed pallet display unit, 2c; stowage instruction data preparation unit, 2d; stowage instruction data storage unit, 2e; documentation preparation unit, 2f; goods selection unit, 2g; stowing work duration calculation unit, 2h; stowage costs calculation unit, 3; display device, 4; laser measurement system, 30; distribution management system, 31; terminal, 31a; distribution data transmission unit, 31b; stowage instruction data display unit, 33; server computer, 34; display unit, 35a; pallet determination unit, 35b; goods-stowed pallet display unit, 35c; stowage instruction data preparation unit, 35d; stowage instruction data transmission unit, 36a; distribution data storage unit, 36b; distribution data process unit, 36c; processed result display unit, 37a; stowage instruction data storage unit, 37b; documentation preparation unit, 38a; distribution period calculation unit, 38b; stock data calculation unit, 38c; supply plan preparation unit, 39; reference data transmission unit, 40; pallet data storage unit.

### [BEST MODE FOR CARRYING OUT THE INVENTION]

### 1. Stowage Data Preparation Device

According to a first embodiment of the present invention, a stowage data preparation device includes a pallet determination unit, a goods-stowed pallet display unit, and a stowage instruction data preparation unit.
The stowage data preparation device, for example, may further include one or a combination of a stowing work duration calculation unit, a stowage costs calculation unit, a center-of-gravity position calculation unit, a center-of-gravity abnormality notification unit, a center-of-gravity abnormality correction production unit, a weight and volume calculation unit, a weight and volume abnormality notification unit, a weight and volume abnormality correction production unit, a stowage instruction data storage unit, a documentation preparation unit, and a shape measurement unit hereinafter described. The stowage data preparation device, for example, may further include an identification data storage unit and a goods selection unit hereinafter described.

The determination procedure, the mode, etc., of the "pallet determination unit" may be selected arbitrarily, as long as it determines a pallet to be used per shipping receptacle, based on goods to be stowed.
The pallet determination unit, for example, may determine the shape and the quantity of the pallet to be used per shipping receptacle.
The pallet determination unit, for example, may display various goods to be stowed and pallets on the screen of the display device, and determine the pallets based on data which is arbitrarily input by a worker using an input unit while comparing the goods and the pallets.

The shape, the quantity, etc., of the "goods" may be selected arbitrarily, as long as they are capable of being loaded into the shipping receptacles to be transported. Examples of the goods may be tubular products, rod-like products, coiled products, plate-like products (sheet-like products), block-like products, deformed products, etc. Examples of a material of these products may be steel, stainless steel, aluminum, plastic, glass, stone, wood, etc. These goods, for example, may weigh approximately from 100g to 20 tons. Examples of types of the goods may be automobile parts, various machine parts, various electrical appliances, gravestones, various general merchandizes, etc. An example of the coiled product may be the one formed by winding a plate-like material or a wire-like material into a coil, etc.
The coiled product and the plate-like product, for example, may be a blank layout being cut into a certain shape from a material. More specifically, the coiled product may be formed in the blank layout by cutting the material (coiled product) along a coiled direction while rewinding it, and then winding it again. The plate-like product, for example, may be formed in the blank layout by cutting the material (coiled product) mainly along a width direction while rewinding it. The mode of the blank layout of the coiled product and the plate-like product, for example, may be simulated by 2D and/or 3D displays on a screen of a display device hereinafter described. Accordingly, it is possible to easily obtain identification data (such as names, parts numbers, weights, shapes and materials) related to respective products after the blank layout is performed thereto. As a result, a simulation of stowage hereinafter described may be performed with extreme ease, based on the identification data. With the coiled product, there is a case that an estimated weight (weight shown on bill) before the blank layout and an actual weight after the blank layout are different, depending on arrangements of external diameters, etc. However, by performing simulation on the blank layout, the actual weight may be grasped with ease and speed, thereby enabling to prevent an overload of the coiled products onto a truck bed.

Examples of the "shipping receptacle" may be various containers such as a dry container, a reefer container, an open top container, and a flat container, and a truck bed, etc. The dry container is preferable among the various containers. The dry container is the most distributed, inexpensive, and easy to secure. There are generally two types of the dry containers: a 20 feet dry container and a 40 feet dry container.

The shape, the quantity, the material, etc., of the "pallet" may be selected arbitrarily. The pallet, for example, may be standardized for the shipping receptacles. In other words, the pallet has a size approximately the same as a planar shape of the inside of shipping receptacle, individually in case of one, and with a combination in case of two or more. With the pallet used in combination of two or more, for example, the shape of the pallet may be a half, a third, a quarter, a fifth, etc., of a long side (or short side) of a floor surface of the shipping receptacle. Similarly, the pallet which has a size of one-sixth, two-sixth, three-sixth, etc., of the floor surface, or the pallet which has an unequal size of two-fifth, three-fifth, etc, may be combined. The pallet divided into one-sixth of the floor surface, etc, with a long side direction divided into thirds and a short side direction divided into halves, in other words, the pallet divided into both the long side direction and the short side direction, may also be combined. As a material of the pallet, for example, metal, plastic, wood, paper (especially, cardboard), etc., may be used.
The description according to the goods, the shipping receptacles and the pallets may be applied similarly to the following descriptions and the other embodiments hereinafter described.

The display procedure, the mode, etc., of the "goods-stowed pallet display unit" may be selected arbitrarily, as long as it displays the goods-stowed pallet per shipping receptacle, by performing simulation of stowing goods onto the pallet determined by the pallet determination unit, on the screen of the display device.

The goods-stowed pallet display unit, for example, may display the 2D and/or 3D images of the goods-stowed pallet per shipping receptacle, and the stowage members used for the goods-stowed pallet per shipping receptacle, on the screen of the display device.
In this case, the goods-stowed pallet display unit preferably displays identification data of pallets, goods and stowage members used for the goods-stowed pallet per shipping receptacle, on the screen of the display device. Particularly, it is preferable to simultaneously display the identification data with the 2D and/or 3D images of the goods-stowed pallet and the stowage members, on the screen of the display device.
The simulation of stowage is preferably displayed in 3D. This is because the simulation of stowing various shapes of goods may be performed with ease.

The "goods-stowed pallet" is a pallet with the goods stowed thereon. Examples of the "stowage members" may be square timbers, crates materials, rushing belts, guide materials, screws, etc. Examples of the "identification data of the pallets, the goods and the stowage members" may be names, parts numbers, weights, shapes, materials, etc. Particularly, the identification data of the goods may be names of consignor, names of consignee, etc., in addition to the above data. The identification data of the various pallets, goods and stowage members, for example, are stored in a database, etc., in advance. And the stored identification data is used for display processing of the simulation of stowage, preparation processing of stowage instruction data hereinafter described, and calculation processing of the center-of-gravity position, weight, etc., hereinafter described. These points may similarly be applied to the following descriptions and the other embodiments hereinafter described.

The preparation procedure, the mode, etc., of the "stowage instruction data preparation unit" may be selected arbitrarily, as long as it prepares stowage instruction data related to the goods-stowed pallet per shipping receptacle, displayed by the goods-stowed pallet display unit.

The stowage instruction data preparation unit, for example, may prepare the stowage instruction data including the 2D and/or 3D images of the goods-stowed pallet per shipping receptacle, and the stowage members used for the goods-stowed pallet per shipping receptacle. In view of recognizing contents of the stowage instruction, the stowage instruction data preparation unit preferably prepares the stowage instruction data including the 2D and 3D images of the goods-stowed pallet and the stowage members.
In this case, the stowage instruction data preparation unit may be one or a combination of (1) a mode of preparing the stowage instruction data further including the identification data of the pallets, the goods and the stowage members, (2) a mode of preparing the stowage instruction data further including data on a conveying direction of the goods-stowed pallet per shipping receptacle into the shipping receptacle, and (3) a mode of preparing the stowage instruction data further including a conveying sequence of the goods-stowed pallet per pallet into the shipping receptacle.
In a case when the shipping receptacle is the truck bed as described above, it is particularly preferable to adopt the mode (3). This is because a loading sequence and an unloading sequence onto the truck bed may be grasped with ease and speed.

The calculation procedure, the mode, etc., of the "stowing work duration calculation unit" may be selected arbitrarily, as long as it calculates duration of the stowing work of the goods-stowed pallet per shipping receptacle. The calculation is based on the identification data of the pallets, the goods and the stowage members used for the goods-stowed pallet per shipping receptacle, displayed by the goods-stowed pallet display unit. In this case, the duration of the stowing work calculated by the stowing work duration calculation unit may be displayed on the screen of the display device, and the stowage instruction data including the calculated duration of the stowing work may be prepared.

The calculation procedure, the mode, etc., of the "stowage costs calculation unit" may be selected arbitrarily, as long as it calculates stowage costs of the goods-stowed pallet per shipping receptacle. The calculation is based on the identification data of the pallets, the goods and the stowage members used for the goods-stowed pallet per shipping receptacle displayed by the goods-stowed pallet display unit, and the duration of the stowing work calculated by the stowing work duration calculation unit. In this case, the stowage costs calculated by the stowage costs calculation unit may be displayed on the screen of the display device, and the stowage instruction data including the calculated stowage costs may be prepared.
Examples of the stowage costs may be stowing work costs (operation costs), packaging materials costs, a pallet charge, etc.

The calculation procedure, the mode, etc., of the "center-of-gravity position calculation unit" may be selected arbitrarily, as long as it calculates a position of the center of gravity of the goods-stowed pallet per shipping receptacle and/or pallet. The calculation is based on the identification data of the pallets, the goods and the stowage members used for the goods-stowed pallet per shipping receptacle, displayed by the goods-stowed pallet display unit.
In a case when the shipping receptacle is the truck bed as described above, the simulation of stowage is performed with consideration to an unloading sequence (in other words, loading sequence) to the truck bed, and the position of the center of gravity per truck bed at the time is calculated.

The position of the center of gravity of the goods-stowed pallet per shipping receptacle and/or pallet calculated by the center-of-gravity position calculation unit, for example, may be displayed on the screen of the display device. Accordingly, it is possible to easily check whether the position of the center of gravity is within an appropriate range or not during the simulation of stowage. Also, the stowage instruction data preparation unit, for example, may prepare the stowage instruction data including the position of the center of gravity of the goods-stowed pallet per shipping receptacle and/or pallet calculated by the center-of-gravity position calculation unit. Accordingly, it is possible for a worker, etc., performing the stowing operation to easily check whether the position of the center of gravity is within an appropriate range or not. Particularly, when the stowage instruction data includes the position of the center of gravity of the goods-stowed pallet per pallet, the goods-stowed pallet per pallet may be transferred safely with consideration to the position of the center of gravity, by using a loading unit (such as a forklift) during the actual stowing operation.

The notification procedure, the mode, etc., of the "center-of-gravity abnormality notification unit" may be selected arbitrarily, as long as it notifies abnormality when the position of the center of gravity of the goods-stowed pallet per shipping receptacle calculated by the center-of-gravity position calculation unit exceeds a predetermined range. An example of the mode of notification may be to notify the abnormality by appealing to the sense of sight, hearing, touch, etc., of a worker performing the simulation of stowage, etc.

The production procedure, the mode, etc., of the "center-of-gravity abnormality correction data production unit" may be selected arbitrarily, as long as it produces correction data for the center-of-gravity abnormality, when the position of the center of gravity of the goods-stowed pallet per shipping receptacle calculated by the center-of-gravity position calculation unit exceeds a predetermined range. The correction data produced by the center-of-gravity abnormality correction data production unit, for example, may be displayed on the screen of the display device. Accordingly, it is possible to perform correction processing for the center-of-gravity abnormality during the simulation of stowage with ease and speed.
An example of the "correction data for the center-of-gravity abnormality" may be comment data such as "shift a position of stowed goods A to one side of the pallet", "stow goods C instead of goods B", "stop stowing goods D", etc.

The calculation procedure, the mode, etc., of the "weight and volume calculation unit" may be selected arbitrarily, as long as it calculates a gross weight and/or volume of the goods-stowed pallet per shipping receptacle. The calculation is based on the identification data of the pallets, the goods and the stowage members used for the goods-stowed pallet per shipping receptacle, displayed by the goods-stowed pallet display unit. Transportation costs are calculated from the gross weight, when the gross weight of the goods forming the goods-stowed pallet per shipping receptacle exceeds a predetermined standard value (in other words, when the gross weight of the goods is relatively large). On the other hand, the transportation costs are calculated from the volume when the gross weight of the goods forming the goods-stowed pallet per shipping receptacle is smaller than the predetermined standard value (in other words, when the gross weight of the goods is relatively small).

The notification procedure, the mode, etc., of the "weight and volume abnormality notification unit" may be selected arbitrarily, as long as it notifies abnormality when the gross weight and/or volume of the goods-stowed pallet per shipping receptacle calculated by the weight and volume calculation unit exceeds a predetermined range. An example of the mode of notification may be to notify the abnormality by appealing to the sense of sight, hearing, touch, etc., of a worker performing the simulation of stowage, etc.

The production procedure, the mode, etc., of the "weight and volume abnormality correction data production unit" may be selected arbitrarily, as long as it produces correction data for the weight and volume abnormality, when the gross weight and/or volume of the goods-stowed pallet per shipping receptacle calculated by the weight and volume calculation unit exceeds a predetermined range. The correction data produced by the weight and volume abnormality correction data production unit, for example, may be displayed on the screen of the display device. Accordingly, it is possible to perform correction processing for the weight and volume abnormality during the stowage stimulation with ease and speed.
An example of the "correction data for the weight and volume abnormality" may be the comment data such as "stop stowing goods A", "stow goods C instead of goods B", "change a stowing position of goods D and goods E", etc.

The stowage data preparation device of the present embodiment, for example, may further include a virtual impact experiment unit which performs a virtual impact experiment of the goods-stowed pallet per shipping receptacle, based on the identification data of the pallets, the goods and the stowage members used for the goods-stowed pallet per shipping receptacle, displayed by the goods-stowed pallet display unit. Accordingly, it is possible to determine the pallet having strength suitable for transporting the shipping receptacles.

The storage procedure, the mode, etc., of the "stowage instruction data storage unit" may be selected arbitrarily, as long as it stores stowage instruction data prepared by the stowage instruction data preparation unit.

The preparation procedure, the mode, etc., of the "documentation preparation unit" may be selected arbitrarily, as long as it prepares documentation required for transporting the shipping receptacles (particularly, container transportation), based on the stowage instruction data stored by the stowage instruction data storage unit. Examples of the documentation may be a container cargo conveying slip, a container load cargo certification of content, a packing list, etc. As described above, when the stowage instruction data includes the identification data of the pallets, the goods and the stowage members, the above documentation may be prepared automatically from the identification data.

The measurement procedure, the mode, etc., of the "identification data measurement unit" may be selected arbitrarily, as long as it measures the identification data of the goods such as shapes, weights, and the centers of gravity. Examples of the measurement unit for measuring the shapes may be (1) a non-contact measurement unit using laser light, (2) a stylus measurement unit, (3) a unit obtaining shapes from photographed images by a photographic device, etc. In the mode of (3), the photographic device may be fixed and disposed around the goods (in three different directions, etc) or the photographic device may be provided so as to move around the goods.

The storage procedure, the mode, etc., of the "identification data storage unit" may be selected arbitrarily, as long as it stores the identification data of the goods. The identification data storage unit may store the identification data of the pallets and the stowage members, in addition to the identification data of the goods.
The selection procedure, the mode, etc., of the "goods selection unit" may be selected arbitrarily, as long as it selects the goods to be stowed, based on the identification data stored by the identification data storage unit. The goods selection unit, for example, may display various goods on the screen of the display device, and select the goods based on data which is arbitrarily input by a worker using an input unit.

### 2. Stowage Data Preparation Method

According to a second embodiment of the present invention, a stowage data preparation method includes a pallet determination step, a goods-stowed pallet display step, and a stowage instruction data preparation step hereinafter described. The stowage data preparation method, for example, may be a method using the stowage data preparation device of the first embodiment.
The stowage data preparation method may further include one or a combination of a stowing work duration calculation step, a stowage costs calculation step, a center-of-gravity position calculation step, a center-of-gravity abnormality notification step, a center-of-gravity abnormality correction data production step, a weight and volume calculation step, a weight and volume abnormality notification step, a weight and volume abnormality correction data production step, a stowage instruction data storage step, a documentation preparation step, and a shape measurement step hereinafter described. The stowage data preparation method may further include, for example, an identification data storage step and a goods selection step hereinafter described.

The determination procedure, the mode, etc., of the "pallet determination step" may be selected arbitrarily, as long as it determines the pallet to be used per shipping receptacle, based on the goods to be stowed.
The pallet determination step, for example, may determine the shape and the quantity of the pallet to be used per shipping receptacle.
The pallet determination step, for example, may display various goods to be stowed and pallets on the screen of the display device, and determine the pallets based on data which is arbitrarily input by a worker using an input unit while comparing the goods and the pallets.

The display procedure, the mode, etc., of the "goods-stowed pallet display step" may be selected arbitrarily, as long as it displays the goods-stowed pallet per shipping receptacle, by performing the simulation of stowing goods onto the pallet determined by the pallet determination unit on the screen of the display device.

The goods-stowed pallet display step, for example, may display the 2D and/or 3D images of the goods-stowed pallet per shipping receptacle, and the stowage members used for the goods-stowed pallet per shipping receptacle, on the screen of the display device.
In this case, the goods-stowed pallet display step preferably displays the identification data of the pallets, the goods, and the stowage members used for the goods-stowed pallet per shipping receptacle, on the screen of the display device. Particularly, the identification data is preferably displayed on the screen of the display device, with the 2D and/or 3D images of the goods-stowed pallet and the stowage members.
The simulation of stowage is preferably displayed in 3D. This is because the simulation of stowing various shapes of goods may be performed with ease.

The "goods-stowed pallet" indicates the pallet with the goods stowed thereon. Examples of the "stowage members" may be a square timbers, crates materials, rushing belts, guide materials, screws, etc. Examples of the "identification data of the pallets, the goods and the stowage members" may be names, parts numbers, weights, shapes, materials, etc. Particularly, the identification data of the goods may be names of consignor and names of consignee, etc., in addition to the above data. The identification data of the various pallets, goods and stowage members are stored, for example, in database, etc. in advance. The stored identification data is used for the display processing of the simulation of stowage, preparation processing of stowage instruction data hereinafter described, and calculation processing of center-of-gravity position, weight, etc., hereinafter described.

The preparation procedure, the mode, etc., of the "stowage instruction data preparation step" may be selected arbitrarily, as long as it prepares the stowage instruction data related to the goods-stowed pallet per shipping receptacle displayed by the goods-stowed pallet display step.

The stowage instruction data preparation step, for example, may prepare the stowage instruction data including the 2D and/or 3D images of the goods-stowed pallet per shipping receptacle, and the stowage members used for the goods-stowed pallet per shipping receptacle. In view of recognizing the contents of the stowage instruction, the stowage instruction data preparation step preferably prepares the stowage instruction data including both the 2D and 3D images of the goods-stowed pallet and the stowage members.
In this case, the stowage instruction data preparation step may be one or a combination of (1) a mode of preparing the stowage instruction data further including the identification data of the pallets, the goods and the stowage members, (2) a mode of preparing the stowage instruction data further including data on a conveying direction of the goods-stowed pallet per shipping receptacle into the shipping receptacle, etc.

The calculation procedure, the mode, etc., of the "stowing work duration calculation step" may be selected arbitrarily, as long as it calculates the duration of the stowing work of the goods-stowed pallet per shipping receptacle, based on the identification data of the pallets, the goods and the stowage members used for the goods-stowed pallet per shipping receptacle, displayed by the goods-stowed pallet display step. In this case, the duration of the stowing work calculated by the stowing work duration calculation step may be displayed on the screen of the display device, and the stowage instruction data including the calculated duration of the stowing work may be prepared.

The calculation procedure, the mode, etc., of the "stowage costs calculation step" may be selected arbitrarily, as long as it calculates the stowage costs of the goods-stowed pallet per shipping receptacle. The calculation is based on the identification data of the pallets, the goods and the stowage members used for the goods-stowed pallet per shipping receptacle displayed by the goods-stowed pallet display unit, and the duration of the stowing work calculated by the stowing work duration calculation unit. In this case, the stowage costs calculated by the stowage costs calculation unit may be displayed on the screen of the display device, and the stowage instruction data including the calculated stowage costs may be prepared.
Examples of the stowage costs may be stowing work costs (operation costs), packaging materials costs, pallet charge, etc.

The calculation procedure, the mode, etc., of the "center-of-gravity position calculation step" may be selected arbitrarily, as long as it calculates the position of the center of gravity of the goods-stowed pallet per shipping receptacle and/or pallet, based on the identification data of the pallets, the goods and the stowage members used for the goods-stowed pallet per shipping receptacle, displayed by the goods-stowed pallet display step.

The position of the center of gravity of the goods-stowed pallet per shipping receptacle and/or pallet calculated by the center-of-gravity position calculation step, for example, may be displayed on the screen of the display device. Accordingly, it is possible to easily check whether the position of the center of gravity is within an appropriate range or not during the simulation of stowage. Also, the stowage instruction data preparation step, for example, may prepare the stowage instruction data including the position of the center of gravity of the goods-stowed pallet per shipping receptacle and/or pallet calculated by the center-of-gravity position calculation unit. Accordingly, it is possible for a worker, etc., performing the stowing operation to easily check whether the position of the center of gravity is within an appropriate range or not. Particularly, when the stowage instruction data includes the position of the center of gravity of the goods-stowed pallet per pallet, the goods-stowed pallet per pallet may be transferred safely with consideration to the position of the center of gravity, by using a loading unit (such as a forklift) during the actual stowing operation.

The notification procedure, the mode, etc., of the "center-of-gravity abnormality notification step" may be selected arbitrarily, as long as it notifies the abnormality when the position of the center of gravity of the goods-stowed pallet per shipping receptacle calculated by the center-of-gravity position calculation step exceeds a predetermined range. An example of the mode of notification may be to notify the abnormality by appealing to the sense of sight, hearing, touch, etc., of a worker performing the simulation of stowage, etc.

The production procedure, the mode, etc., of the "center-of-gravity abnormality correction data production step" may be selected arbitrarily, as long as it produces the correction data for the center-of-gravity abnormality, when the position of the center of gravity of the goods-stowed pallet per shipping receptacle calculated by the center-of-gravity position calculation step exceeds a predetermined range. The correction data produced by the center-of-gravity abnormality correction data production step, for example, may be displayed on the screen of the display device. Accordingly, it is possible to perform the correction processing for the center-of-gravity abnormality during the simulation of stowage with ease and speed.
An example of the "correction data for the center-of-gravity abnormality" may be the comment data such as "shift a stowing position of goods A to one side of the pallet", "stow goods C instead of goods B", "stop stowing goods D", etc.

The calculation procedure, the mode, etc., of the "weight and volume calculation step" may be selected arbitrarily, as long as it calculates the gross weight and/or volume of the goods-stowed pallet per shipping receptacle, based on the identification data of the pallets, the goods and the stowage members used for the goods-stowed pallet per shipping receptacle, displayed by the goods-stowed pallet display step. The transportation costs are calculated from the gross weight, when the gross weight of the goods forming the goods-stowed pallet per shipping receptacle exceeds a predetermined standard value (in other words, when the gross weight of the goods is relatively large). On the other hand, the transportation costs is calculated from the volume, when the gross weight of the goods forming the goods-stowed pallet per shipping receptacle is smaller than the predetermined standard value (in other words, when the gross weight of the goods is relatively small).

The notification procedure, the mode, etc., of the "weight and volume abnormality notification step" may be selected arbitrarily, as long as it notifies the abnormality when the gross weight and/or volume of the goods-stowed pallet per shipping receptacle calculated by the weight and volume calculation step exceeds a predetermined range. An example of the mode of notification may be to notify the abnormality by appealing to the sense of sight, hearing, touch, etc., of a worker performing the simulation of stowage, etc.

The production procedure, the mode, etc., of the "weight and volume abnormality correction data production step" may be selected arbitrarily, as long as it produces the correction data for the weight and volume abnormality, when the gross weight and/or volume of the goods-stowed pallet per shipping receptacle calculated by the weight and volume calculation step exceeds a predetermined range. The correction data produced by the weight and volume abnormality correction data production step, for example, may be displayed on the screen of the display device. Accordingly, it is possible to perform the correction processing for the weight and volume abnormality during the simulation of stowage with ease and speed.
An example of the "correction data for the weight and volume abnormality" may be the comment data such as "stop stowing goods A", "stow goods C instead of goods B", "change a stowing position of goods D and goods E", etc.

The stowage data preparation method of the present embodiment, for example, may further include a virtual impact experiment step which performs a virtual impact experiment of the goods-stowed pallet per shipping receptacle, based on the identification data of the pallets, the goods and the stowage members used for the goods-stowed pallet per shipping receptacle, displayed by the goods-stowed pallet display step. Accordingly, it is possible to determine the pallet having strength suitable for transporting the shipping receptacles.

The storage procedure, the mode, etc., of the "stowage instruction data storage step" may be selected arbitrarily, as long as it stores the stowage instruction data prepared by the stowage instruction data preparation step.

The preparation procedure, the mode, etc., of the "documentation preparation step" may be selected arbitrarily, as long as it prepares the documentation required for transporting the shipping receptacles (particularly, container transportation), based on the stowage instruction data stored by the stowage instruction data storage step. Examples of the documentation may be a container cargo conveying slip, a container load cargo certification of content, a packing list, etc.

The measurement procedure, the mode, etc., of the "identification data measurement step" may be selected arbitrarily, as long as it measures the identification data of shapes, weights, centers of gravity, etc., of the goods. Examples of the measurement step for measuring the shapes may be (1) a non-contact measurement step using laser light, (2) a stylus measurement step, (3) a step obtaining shapes from photographed images by a photographic device, etc. In the mode of (3), the photographic device may be fixed and disposed around the goods (in three different directions, etc) or the photographic device may be provided so as to move around the goods.

The storage procedure, the mode, etc., of the "identification data storage step" may be selected arbitrarily, as long as it stores the identification data of the goods. The identification data storage unit, for example, may store the identification data of the pallets and the stowage members, in addition to the identification data of the goods.
The selection procedure, the mode, etc., of the "goods selection step" may be selected arbitrarily, as long as it selects the goods to be stowed, based on the identification data stored by the identification data storage step. The goods selection step, for example, may display various goods on the screen of the display device, and select the goods based on data which is arbitrarily input by a worker using an input unit.

3. Method for Conveying Goods into Shipping Receptacles
According to a third embodiment of the present invention, a method for conveying goods into shipping receptacles further includes an actual stowing step and a conveying step hereinafter described.

The stowage procedure, the mode, etc., of the "actual stowing step" may be selected arbitrarily, as long as it performs an actual (real) stowing operation of the goods onto the pallets, based on the stowage instruction data prepared by the stowage data preparation device.
The conveying procedure, the mode, etc., of the "conveying step" may be selected arbitrarily, as long as it conveys the goods-stowed pallet per shipping receptacle stowed by the actual stowing step into the shipping receptacle all at once.
Another conveying step, for example, may be a step in which the goods-stowed pallet per pallet stowed by the actual stowing step is conveyed into the shipping receptacle with a predetermined sequence. When the shipping receptacle is the truck bed as described above, loading with consideration given to an unloading sequence for the truck bed may be performed.

### (Conveying Step Using a Carriage)

The above conveying step may be a step in which the goods-stowed pallet is conveyed into the shipping receptacle all at once, for example, by preparing a carriage that can move on a floor surface. The carriage has a pallet supporter which supports a bottom surface side of the goods-stowed pallet, and an elevator which moves the pallet supporter vertically. The carriage is moved into a lower opening space of the goods-stowed pallet. The pallet supporter elevated by the elevator lifts the goods-stowed pallet from the floor surface, by supporting the bottom surface side of the pallet. Having lifted, the goods-stowed pallet is transported in a horizontal direction by moving the carriage. The pallet supporter lowered by the elevator releases the support of the bottom surface side, and places the goods-stowed pallet on the floor surface.

The elevator, for example, may include an expanding/contracting member which expands/contracts according to supply/discharge of fluid (normally gas (particularly, air, etc.)), and a drain that connects the expanding/contracting member and a fluid supply source. The elevator also includes an opening/closing valve mechanism provided halfway through the drain, and supplies/discharges the fluid for the protruding member. Accordingly, it is possible to move heavier goods vertically, and position the goods to a more accurate transport position.

The feeding step may use, for example, a guide tool that includes a guide main body that can move on the floor surface.
The guide main body includes a moving portion on which the carriage moves, and a guide portion which guides a guided portion provided to the carriage that moves on the moving portion..
In this case, the guide tool mounted with the carriage thereto is prepared on the floor surface of a stage, near one end opening of the shipping receptacle at a predetermined position. The guide tool is moved on the floor surface of the stage and the shipping receptacle, thereby positioning the guide tool in the shipping receptacle. Place the goods-stowed pallet on the floor surface of the stage. Then, the carriage is moved on the moving portion of the guide tool and the floor surface of the stage, thereby positioning the carriage on the stage in a state that it has entered the lower opening space of the goods-stowed pallet. Next, the pallet supporter is elevated by the elevator. The pallet supporter supports the bottom surface and lifts the goods-stowed pallet from the floor surface. The carriage is moved on the floor surface of the stage and the moving portion of the guide tool, thereby positioning the goods-stowed pallet being lifted in the shipping receptacle. Thereafter, the pallet supporter is lowered by the elevator. The pallet supporter releases the support of the bottom surface, thereby placing the goods-stowed pallet on the floor surface of the shipping receptacle. Then, the guide tool mounted with the carriage is moved on the floor surface of the shipping receptacle and the stage, thereby positioning the guide tool on the stage. As a result, the goods-stowed pallet is conveyed into the shipping receptacle.

The shape, size, quantity, etc., of the "guide tool" may be selected arbitrarily, as long as it includes the guide main body provided with the moving portion and the guide portion. The moving portion, for example, may be a floor of a horizontal plate. The guide portion, for example, may be a guide surface, a rotating roller, a rolling ball, etc. In view of guiding, the guide portion is preferably made of the guide surface. The guided portion, for example, may be a rotating roller, a rolling ball, a guide surface, etc. In view of being guided, the guided portion is preferably made of the rotating roller and/or the rolling ball.
The guide main body, for example, may include a flat floor as the moving portion, and a guide wall as the guide portion which is raised from both edges of the floor. In this case, a cross section of the guide main body may have a U-shape, an L-shape, a rectangular tube, etc.
The guide tool, for example, may further include a main body elevator which moves the guide main body vertically to the floor surface. Accordingly, it is possible to transfer the guide tool without causing frictional contact with the floor surface of the shipping receptacle, stage, etc. The main body elevator, for example, may apply the structure of the elevator.

### (Conveying Step Using First and Second Elevating/Sliding Devices)

The above conveying step, for example, may be a step in which the goods-stowed pallet is conveyed into the shipping receptacle all at once, by preparing a first elevating/sliding device on the floor surface of the stage near one end opening of the shipping receptacle at a predetermined position. In the conveying step, a second elevating/sliding device may also be prepared on the floor surface of the shipping receptacle at a predetermined position. The goods-stowed pallet is passed horizontally between the first elevating/sliding device and the second elevating/sliding device, in a state that the goods-stowed pallet is being lifted from the floor surface of the stage or the shipping receptacle.

The first and second elevating/sliding devices include first and second sliding bodies which movably support the bottom surface side of the goods-stowed pallet in a horizontal direction, and first and second elevating bodies which move the first and second sliding bodies vertically. Examples of the sliding body may be an endless belt, numerous rolling members (such as rolling balls and rollers), a sliding surface, etc. Among these, a plurality of rollers disposed in parallel is preferable. The elevating body, for example, may include an elastic material which is extended by introducing air and can push up the sliding body thereby.
The structure, shape, size, etc., of the stage may be selected arbitrarily. The stage, for example, may have (1) a mode including a floor surface substantially the same height level as the floor surface of the shipping receptacle placed on the ground, (2) a mode including a floor surface substantially the same height level as the floor surface of the shipping receptacle placed on a chassis of a vehicle such as a truck, etc.

### 4. Distribution Management System

According to a fourth embodiment of the present invention, a distribution management system includes a terminal provided to a plurality of distribution bases and a server computer connected to the terminal via a network.

The server computer includes a pallet determination unit, a goods-stowed pallet display unit, a stowage instruction data preparation unit, and a stowage instruction data transmission unit hereinafter described.

The determination procedure, the mode, etc., of the "pallet determination unit" may be selected arbitrarily, as long as it determines the pallet to be used per shipping receptacle, based on the goods to be stowed. The structure of the pallet determination unit of the first embodiment, for example, may be applied to this pallet determination unit.

The display procedure, the mode, etc., of the "goods-stowed pallet display unit" may be selected arbitrarily, as long as it displays the goods-stowed pallet per shipping receptacle, by performing the simulation of stowing goods onto the pallet determined by the pallet determination unit, on the screen of the display device. The structure of the goods-stowed pallet display unit of the first embodiment, for example, may be applied to this goods-stowed pallet display unit.

The preparation procedure, the mode, etc., of the "stowage instruction data preparation unit" may be selected arbitrarily, as long as it prepares the stowage instruction data related to the goods-stowed pallet per shipping receptacle, displayed by the goods-stowed pallet display unit. The structure of the stowage instruction data preparation unit of the first embodiment, for example, may be applied to this stowage instruction data preparation unit.

The transmission procedure, the mode, etc., of the "stowage instruction data transmission unit" may be selected arbitrarily, as long as it transmits the stowage instruction data prepared by the stowage instruction data preparation unit to the terminal.

The terminal includes a stowage instruction data display unit hereinafter described.
The display procedure, the mode, etc., of the "stowage instruction data display unit" may be selected arbitrarily, as long as it receives and displays the stowage instruction data transmitted by the stowage instruction data transmission unit.

In the distribution management system according to the fourth embodiment, for example, the terminal may include a distribution data transmission unit hereinafter described, and the server computer may include a distribution data storage unit, a distribution data process unit, and a processed result display unit hereinafter described. The computer, for example, may further include a receiving abnormality detection unit and/or a goods selection unit hereinafter described.

The transmission procedure, the mode, etc., of the "distribution data transmission unit" may be selected arbitrarily, as long as it transmit the distribution status data including the identification data of the goods to be distributed, and position data of distribution bases to the server computer.
The distribution data transmission unit, for example, may include (1) a mode of storing in a memory device of the server computer as a downloadable program, and downloading from the server computer to the terminal when the distribution management system of the present embodiment is to be utilized for execution, (2) a mode of storing in the terminal in advance, as a required program, etc., for the distribution management system of the present embodiment, (3) a mode of being a browser program installed in general personal computers, such as a World Wide Web browser, etc. Examples of when to transmit the distribution status data are: inspection registration, work instruction performance registration, booking request, drayage request, etc.

Examples of the identification data may be names of goods, parts numbers, weights, shapes, materials, quantities, names of consignor, names of consignee, etc.
The position data distinguishes in which distribution base the goods are positioned. The position data may be substituted with an authentication unit of the terminal. If the authentication unit can distinguish the respective distribution bases, the distribution base may be identified at the time when the authentication is performed, thereby enabling to determine the position at the same time.

The storage procedure, the mode, etc., of the "distribution data storage unit" may be selected arbitrarily, as long as it receives and stores distribution status data transmitted from the distribution data transmission unit. Accordingly, it is possible to manage receiving data, product data, etc., of the goods in advance. And by updating the receiving data, storage data, the product data, etc., in real time, abnormality such as late receiving, may be grasped with ease.
The distribution data storage unit, for example, may store the identification data of the pallets and the stowage members, in addition to the distribution status data.

The process procedure, the mode, etc., of the "distribution data process unit" may be selected arbitrarily, as long as it processes the distribution status data stored by the distribution data storage unit.
The distribution data process unit, for example, may be (1) a mode of processing the distribution status data, and preparing progress data indicating in which distribution base a special type of goods in distribution is held, etc., (2) a mode of processing the distribution status data, and preparing specific data of the goods held in any one of the distribution bases, etc.

The display procedure, the mode, etc., of the "processed result display unit" may be selected arbitrarily, as long as it displays the processed result by the distribution data process unit.

The detection procedure, the mode, etc., of the "receiving abnormality detection unit" may be selected arbitrarily, as long as it detects the abnormality related to goods reception, based on the processed result by the distribution data process unit. When the receiving abnormality is detected by the receiving abnormality detection unit, for example, the receiving abnormality may be notified by a suitable notification unit, and the detected result may be transmitted to the terminal connected to the server computer. An example of the notification mode may be to notify the abnormality by appealing to the sense of sight, hearing, touch, etc.

The selection procedure, the mode, etc., of the "goods selection unit" may be selected arbitrarily, as long as it selects the goods to be stowed, based on the distribution status data stored in the distribution data storage unit. Accordingly, it is possible to select the goods to be stowed from large quantities of stored data with ease.

In the distribution management system according to the fourth embodiment, for example, the server computer may further include a stowage instruction data storage unit and a documentation preparation unit hereinafter described.

The storage procedure, the mode, etc., of the "stowage instruction data storage unit" may be selected arbitrarily, as long as it stores the stowage instruction data prepared by the stowage instruction data preparation unit.

The preparation procedure, the mode, etc., of the "documentation preparation unit" may be selected arbitrarily, as long as it prepares the documentation required for transporting the shipping receptacles (particularly, container transportation), based on the stowage instruction data stored in the stowage instruction data storage unit, and the distribution status data stored in the distribution data storage unit. Examples of the documentation may be a container cargo conveying slip, a container load cargo certification of content, a packing list, etc. When the stowage instruction data includes the identification data of the pallets, the goods and the stowage members, the documentation may be prepared automatically from the identification data with ease.

In the distribution management system according to the fourth embodiment, for example; the server computer may further include a distribution period calculation unit, a stock data calculation unit and a supply plan preparation unit hereinafter described.

The calculation procedure, the mode, etc., of the "distribution period calculation unit" may be selected arbitrarily, as long as it calculates a distribution period (may be referred to as lead time) of the goods being distributed between the respective distribution bases.
The distribution period calculation unit may determine a distribution processing period required for each distribution processing element for cargo distribution, and calculate the distribution period by adding these distribution processing periods.
Examples of the distribution processing element may be a cargo manufacturing element, a vanning element, a customs clearance element, a loading element, a sea-transportation element, an unloading element, a consignee operation waiting element, a land-transportation element, etc. The distribution processing period may differ according to each type of cargo to be distributed, and each consignee. In general, when the type of cargo is different, a required manufacturing period often differs, etc. And when the consignee is different, the period changes due to a different transportation distance.

The calculation procedure, the mode, etc., of the "stock data calculation unit" may be selected arbitrarily, as long as it calculates stock data of the goods of the consignee, based on the distribution status data stored by the distribution data storage unit.
The stock data calculation unit, for example, may calculate the stock data of the goods of the consignee, based on the distribution status data stored in the distribution data storage unit, and data related to the stock obtained from the consignee.

The preparation procedure, the mode, etc., of the "supply plan preparation unit" may be selected arbitrarily, as long as it prepares a supply plan (transportation plan) to supply the goods to the consignee so that an amount of stock held by the consignee stays within a predetermined range. The preparation is based on the distribution period calculated by the distribution period calculation unit, and the stock data calculated by the stock data calculation unit.
The supply plan relates to the timing and the quantity of goods to be supplied to the consignee, so that the amount of stock held by the consignee may stay substantially at a fixed quantity. In the supply plan, for example, securing of the pallets and the shipping receptacles, the timing of vanning, etc., may be planned at the same time.
A decrease of the stock held by the consignee may be estimated by predicting the timing and the quantity of the goods to be used from an order plan of the consignee. An increase of the stock held by the consignee may be estimated, by considering a delay caused by the transportation period, as an interval of container ships arriving at a port and a transportation period are known in advance. The supply plan may be prepared by determining the timing and the quantity of the goods to be supplied to the consignee, based on the estimated stock increase/decrease held by the consignee.

In the distribution management system according to the fourth embodiment, for example, the server computer may further include a reference data transmission unit hereinafter described.
The transmission procedure, the mode, etc., of the "reference data transmission unit" may be selected arbitrarily, as long as it receives a reference demand signal transmitted from the terminal, and transmits the processed result by the distribution data process unit to the terminal, corresponding to the reference demand signal.

The reference data transmission unit, for example, may specify a user of the terminal by utilizing an optional authentication unit when the terminal is connected to the server computer, thereby enabling to limit a range of referable and updatable terminal data.

In the distribution management system according to the fourth embodiment, for example, the server computer may further include a pallet data storage unit hereinafter described.

The storage procedure, the mode, etc., of the "pallet data storage unit" may be selected arbitrarily, as long as it stores pallet data including a usage history and a present position of the pallet determined by the pallet determination unit.

In the distribution management system according to the fourth embodiment, the server computer, for example, may further include a transport schedule preparation unit hereinafter described.

The preparation procedure, the mode, etc., of the "transport schedule preparation unit" may be selected arbitrarily, as long as it prepares a transport schedule based on the stowage instruction data prepared by the stowage instruction data preparation unit and the supply plan prepared by the supply plan preparation unit.
Examples of the transport schedule may be a schedule related to manufacturing, receiving, stowing, vanning, shipping, etc.

In the distribution management system according to the fourth embodiment, for example, the terminal may further include an identification data measurement unit which measures the identification data of the goods to be stowed.
The measurement procedure, the mode, etc., of the "identification data measurement unit" may be selected arbitrarily, as long as it measures the identification data of the goods, such as shapes, weights, centers of gravity, etc. The measurement unit to measure the shape, for example, may be (1) a non-contact measurement unit using laser light, (2) a stylus measurement unit, (3) a unit obtaining shapes from photographed images by a photographic device, etc. In the mode of (3), the photographic device may be fixed and deposited around the goods (in three different directions, etc) or the photographic device may be provided so as to move around the goods.

Meanwhile, for example, an identification data memory medium which stores the identification data of the goods may be provided at least to one of the goods, the pallets and the shipping receptacles. Accordingly, it is possible to refer the identification data without accompanying materials such as a bill, thereby enabling to obtain details of the goods, etc.
Examples of the identification data memory medium may be a bar code, a magnetic medium, a semiconductor memory, etc. Among these, the bar code is preferable, as it may be arranged at a low cost. Particularly, a 2D bar code is preferable as it provides a memory capacity which can store all the identification data without sorting out the contents. As for the semiconductor memory, a medium which can read out data stored by electromagnetic wave, etc., such as an RFID tag and a non-contact IC card is preferable.

In the distribution management system according to the fourth embodiment, the server computer, for example, may further include one or combinations of a stowing work duration calculation unit, a stowage costs calculation unit, a center-of-gravity position calculation unit, a center-of-gravity abnormality notification unit, a center-of-gravity abnormality correction production unit, a weight and volume calculation unit, a weight and volume abnormality notification unit, a weight and volume abnormality correction production unit, a virtual impact experiment unit hereinafter described.

The calculation procedure, the mode, etc., of the "stowing work duration calculation unit" may be selected arbitrarily, as long as it calculates the duration of the stowing work of the goods-stowed pallet per shipping receptacle. The calculation is based on the identification data of the pallets, the goods and the stowage members used by the goods-stowed pallet per shipping receptacle, displayed by the goods-stowed pallet display unit. The structure of the stowing work duration calculation unit described in the first embodiment, for example, may be applied to this stowing work duration calculation unit.

The calculation procedure, the mode, etc., of the "stowage costs calculation unit" may be selected arbitrarily, as long as it calculates the stowage costs of the goods-stowed pallet per shipping receptacle. The calculation is based on the identification data of the pallets, the goods and the stowage members used for the goods-stowed pallet per shipping receptacle displayed by the goods-stowed pallet display unit, and the duration of the stowing work calculated by the stowing work duration calculation unit. The structure of the stowage costs calculation unit described in the first embodiment, for example, may be applied to this stowage costs calculation unit.

The calculation procedure, the mode, etc., of the "center-of-gravity position calculation unit" may be selected arbitrarily, as long as it calculates the position of the center of gravity of the goods-stowed pallet per shipping receptacle and/or pallet. The calculation is based on the identification data of the pallets, the goods and the stowage members used for the goods-stowed pallet per shipping receptacle, displayed by the goods-stowed pallet display unit. The structure of the center-of-gravity position calculation unit described in the first embodiment, for example, may be applied to this center-of-gravity position calculation unit.

The notification procedure, the mode, etc., of the "center-of-gravity abnormality notification unit" may be selected arbitrarily, as long as it notifies the abnormality when the position of the center of gravity of the goods-stowed pallet per shipping receptacle calculated by the center-of-gravity position calculation unit exceeds a predetermined range. The structure of the center-of-gravity abnormality notification unit described in the first embodiment, for example, may be applied to this center-of-gravity abnormality notification unit.

The production procedure, the mode, etc., of the "center-of-gravity abnormality correction data production unit" may be selected arbitrarily, as long as it produces the correction data for the center-of-gravity abnormality, when the position of the center of gravity of the goods-stowed pallet per shipping receptacle calculated by the center-of-gravity position calculation unit exceeds a predetermined range. The structure of the center-of-gravity abnormality correction data production unit described in the first embodiment, for example, may be applied to this center-of-gravity abnormality correction production unit.

The calculation procedure, the mode, etc., of the "weight and volume calculation unit" may be selected arbitrarily, as long as it calculates the gross weight and/or volume of the goods-stowed pallet per shipping receptacle. The calculation is based on the identification data of the pallets, the goods and the stowage members used for the goods-stowed pallet per shipping receptacle, displayed by the goods-stowed pallet display unit. The structure of the weight and volume calculation unit described in the first embodiment, for example, may be applied to this weight and volume calculation unit.

The notification procedure, the mode, etc., of the "weight and volume abnormality notification unit" may be selected arbitrarily, as long as it notifies the abnormality when the gross weight and/or volume of the goods-stowed pallet per shipping receptacle calculated by the weight and volume calculation unit exceeds a predetermined range. The structure of the weight and volume abnormality notification unit described in the first embodiment, for example, may be applied to this weight and volume abnormality notification unit.

The production procedure, the mode, etc., of the "weight and volume abnormality correction data production unit" may be selected arbitrarily, as long as it produces the correction data to the weight and volume abnormality when the gross weight and/or volume of the goods-stowed pallet per shipping receptacle calculated by the weight and volume calculation unit exceeds a predetermined range. The structure of the weight and volume abnormality correction data production unit described in the first embodiment, for example, may be applied to this weight and volume abnormality correction production unit.

The experiment procedure, the mode, etc., of the "virtual impact experiment unit" may be selected arbitrarily, as long as it performs the virtual impact experiment on the goods-stowed pallet per shipping receptacle. The experiment is based on the identification data of the pallets, the goods and the stowage members used for the goods-stowed pallet per shipping receptacle, displayed by the goods-stowed pallet display unit. The structure of the virtual impact experiment unit described in the first embodiment, for example, may be applied to this virtual impact experiment unit.

Examples of the "distribution bases" may be a consignor, a vanning center, a devanning center, a consignee, etc. The "vanning center" and the "devanning center" are facilities where respective vanning and devanning operations may be performed. The "vanning" is to convey the goods-stowed pallets into the shipping receptacle (particularly container). The "devanning" is to remove the goods-stowed pallets loaded in the shipping receptacle (particularly, container) from the shipping receptacle.
The mode of the "server computer" may be selected arbitrarily, as long as it is a computer which can execute a distribution management system program to operate the distribution management system of the present embodiment. For example, it may be a pair of computer systems provided at a certain place, or a plurality of sets of computer systems disposed at a plurality of places with distance. The server computer may be disposed at any place. For example, the server computer may be provided at any of the distribution bases, or at a certain place such as a data center, etc.
Examples of the "terminal" may be an existing personal computer, a portable terminal, etc.
Examples of the "network" may be the Internet, telephone lines, various leased lines, etc. Wired and wireless may be selected arbitrarily.

### [EXAMPLES]

Hereinafter, examples of the present invention will be described in detail with reference to the drawings.

### (1) Structure of Stowage Data Preparation Device

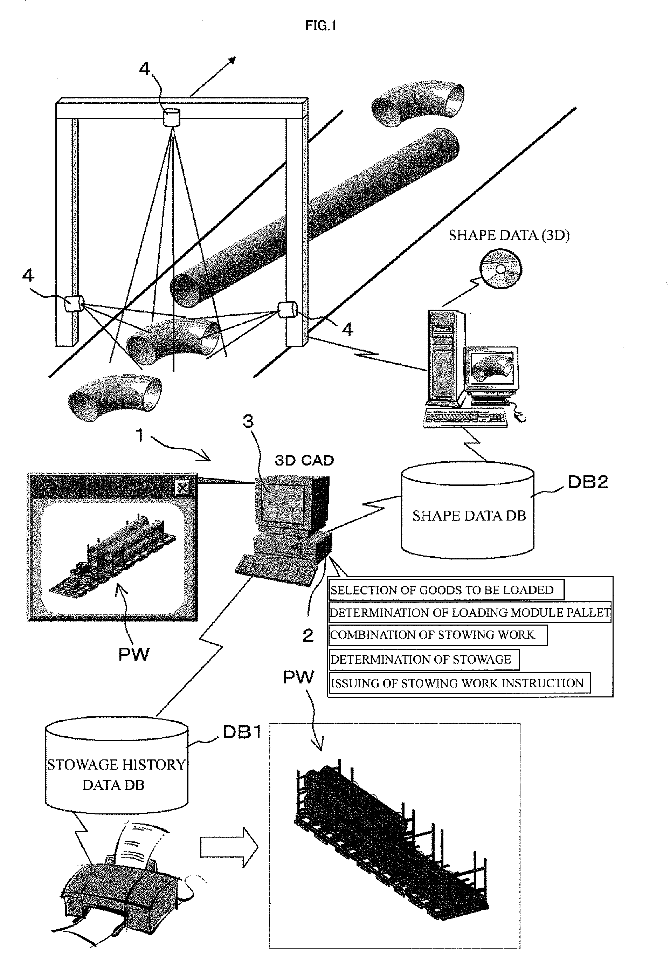

A stowage data preparation device 1 in this example, as shown in FIG. 1, includes a computer 2. The computer 2 is connected with a display device 3, a database DB1 and a database DB2. In the database DB2 (exemplified as an "identification data storage unit" in the present invention), data on goods' shapes measured by laser measurement systems 4 (exemplified as an "identification data measurement unit" in the present invention) are stored.
In the database DB2, data on names, parts numbers, weights, materials, names of consignor, names of consignee, etc. are stored as identification data of various goods, in addition to the data on the goods' shapes. Also, in the database DB2, data on names, parts numbers, weights, shapes, materials, etc., are stored in advance, as identification data of various pallets and stowage members.

In this example, various tubular products are exemplified as goods W. A 40 feet dry container (hereinafter, may be referred simply as a "container") is exemplified as a "shipping receptacle" of the present invention. A module pallet which is standardized (modularized) for containers is exemplified as a pallet P.

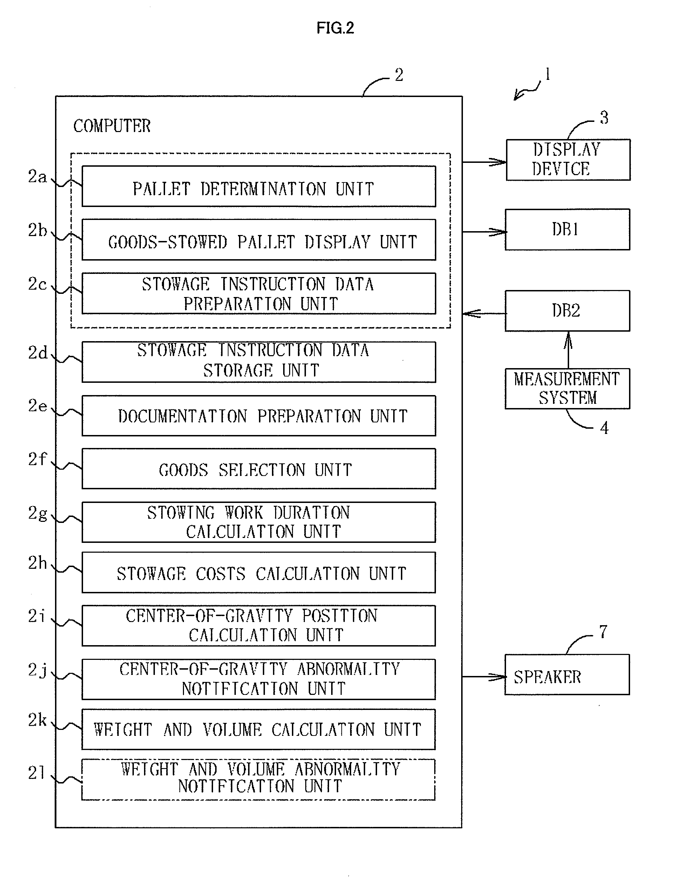

The computer 2, as shown in FIG. 2, includes a pallet determination unit 2a, a goods-stowed pallet display unit 2b, and a stowage instruction data preparation unit 2c, as programs to execute stowage data preparation processing.

The pallet determination unit 2a displays various goods W to be stowed and various pallets P on a screen of the display device 3, based on the respective identification data (such as shapes) of the various goods W and pallets P stored in the database DB2. The pallet determination unit 2a determines the shape and the quantity of the pallet P to be used per container, corresponding to the shapes, etc., of the goods W (to be stowed).

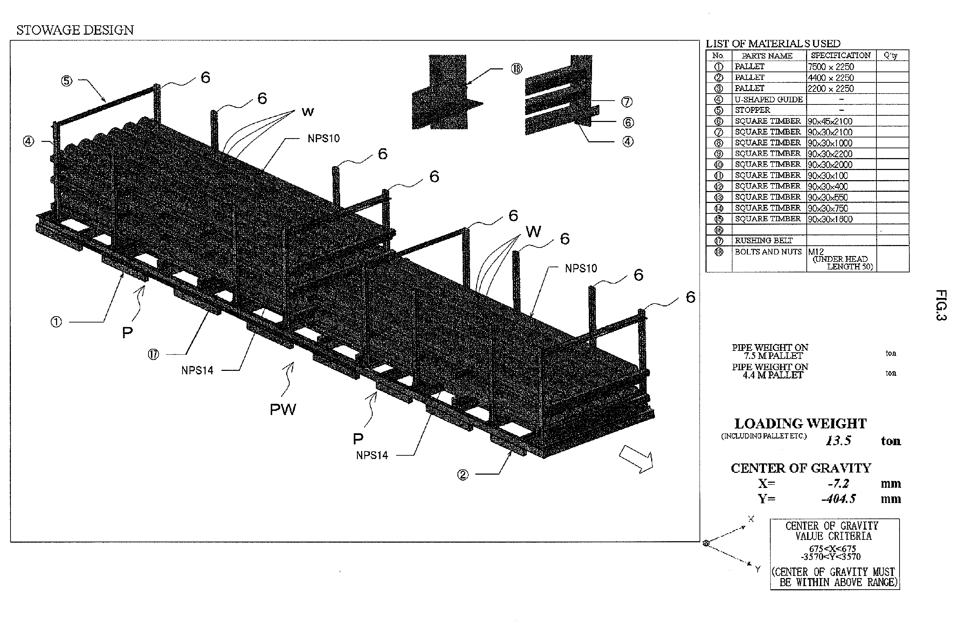

The goods-stowed pallet display unit 2b, as shown in FIGS. 3 and 9, displays a 3D image of a goods-stowed pallet PW per container on the screen of the display device 3, based on the respective identification data (such as shapes) of various goods W, pallets P and stowage members 6, stored in the database DB2. The goods-stowed pallet display unit 2b displays a simulation of stowing the goods W onto the pallet P determined by the pallet determination unit 2a in 3D.

In the simulation of stowage, as shown in FIGS. 7 and 12, the displayed image of the goods-stowed pallet PW may be switched in the 3D and a 2D image. Examples of the 2D image are a front view, a side view, a plan view, etc., of the goods-stowed pallet PW.

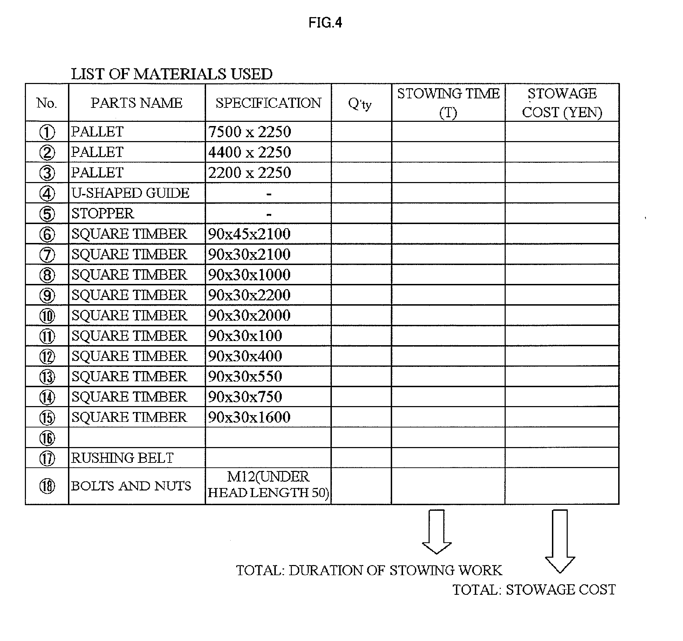

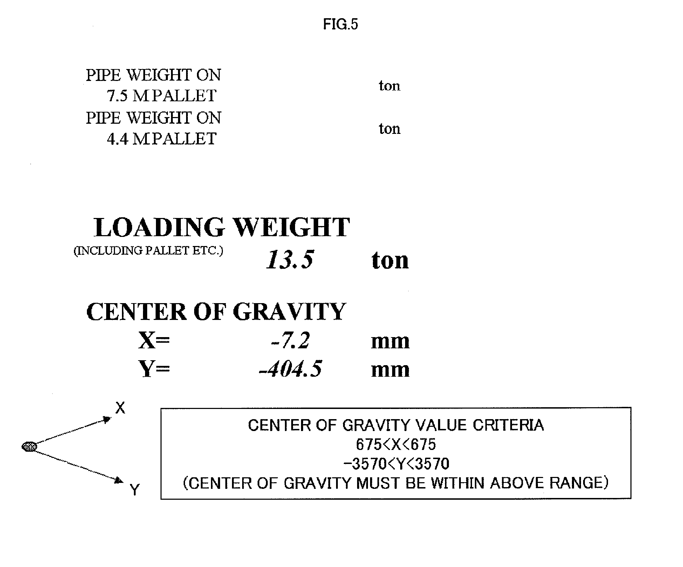

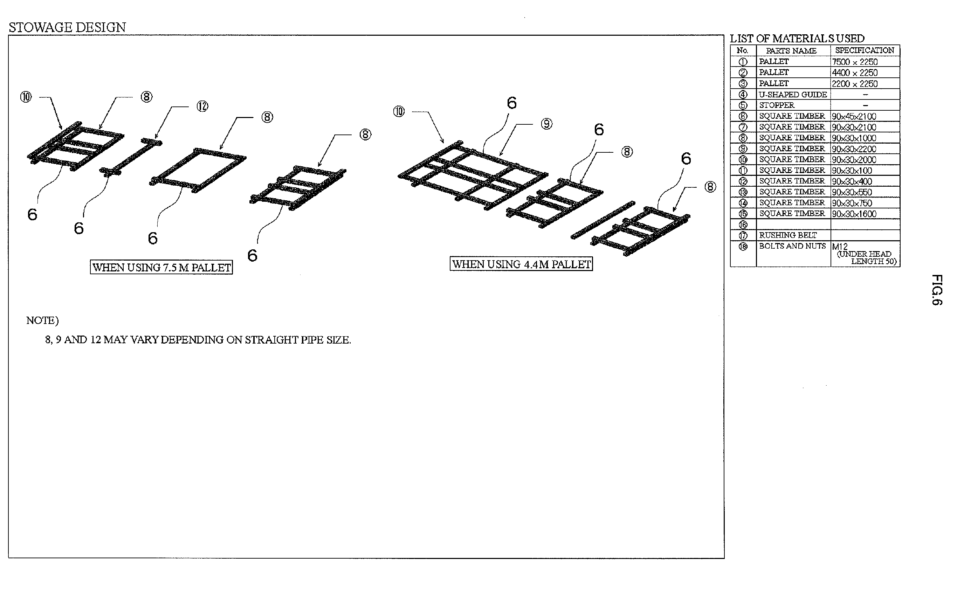

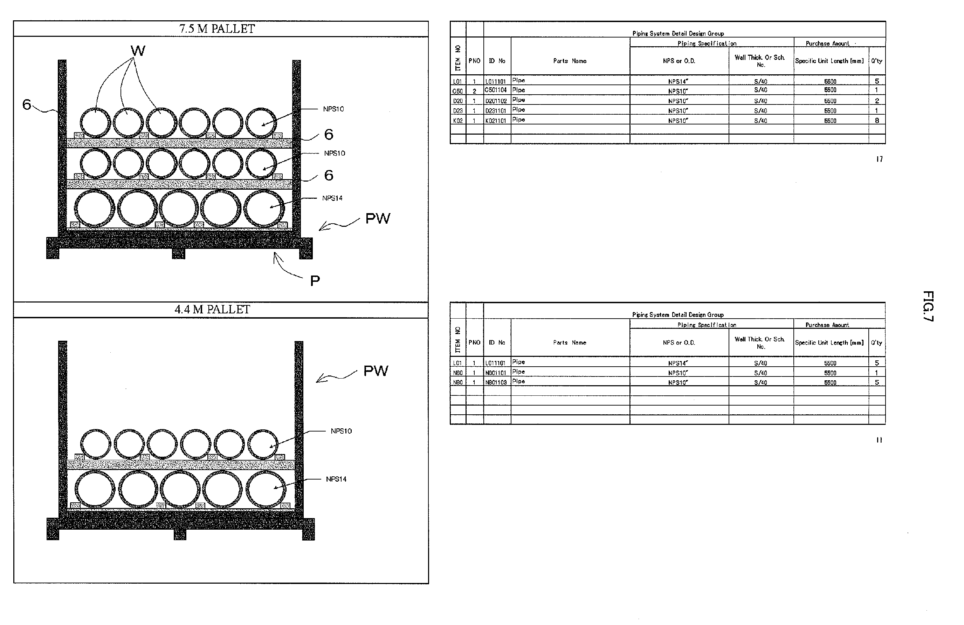

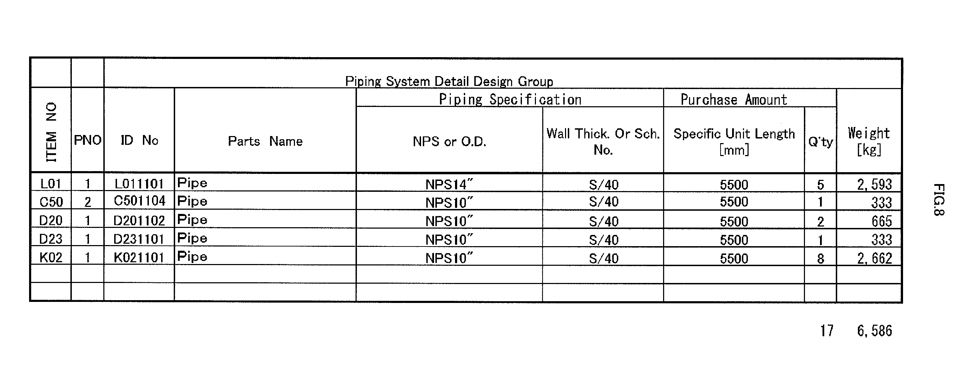

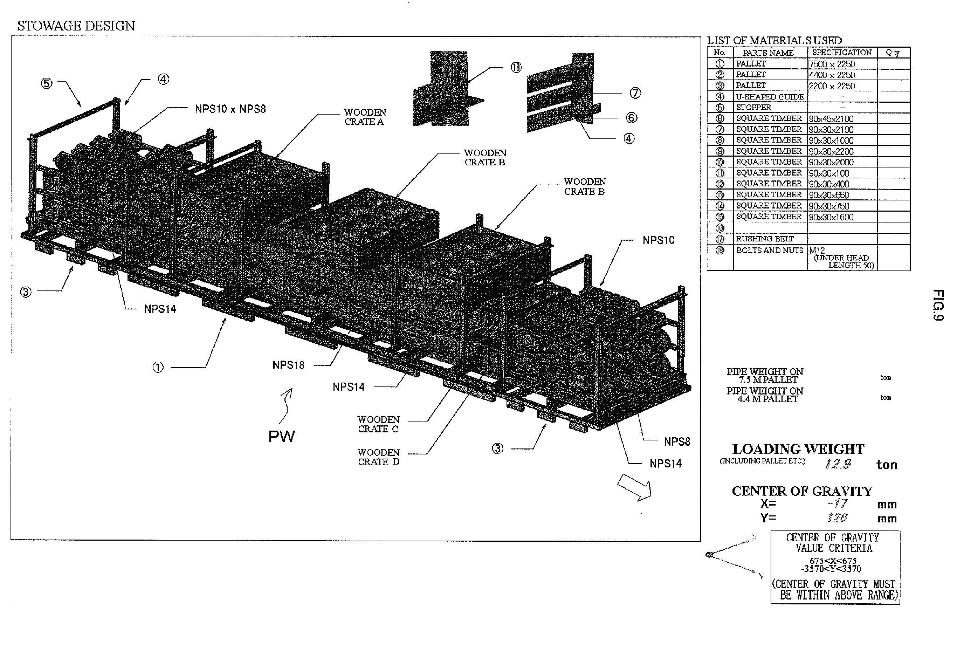

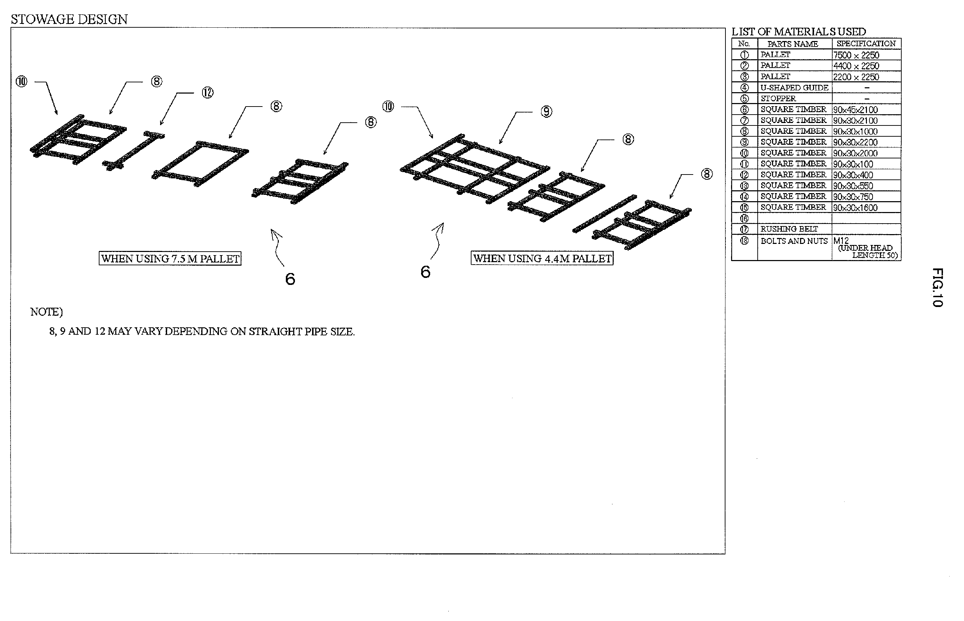

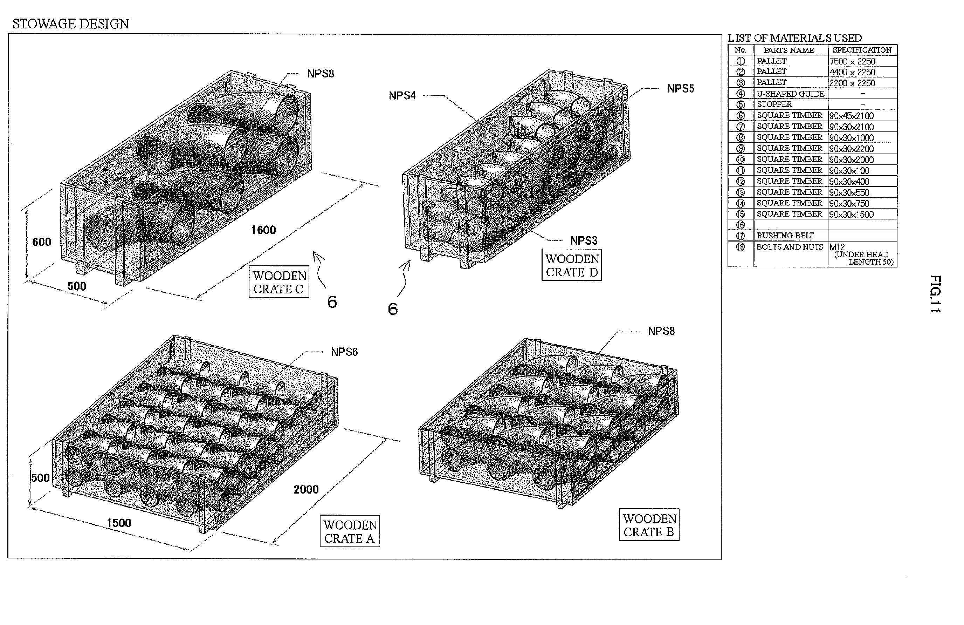

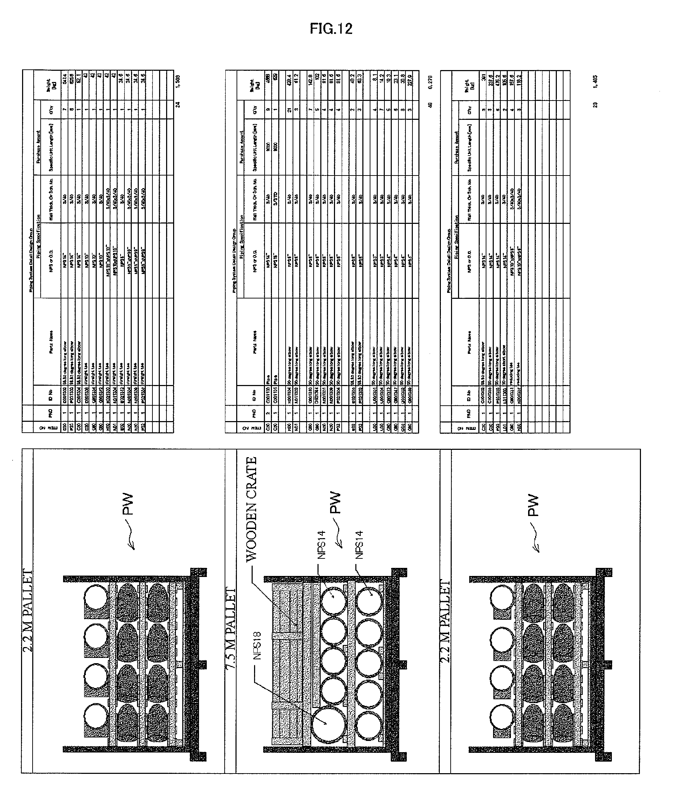

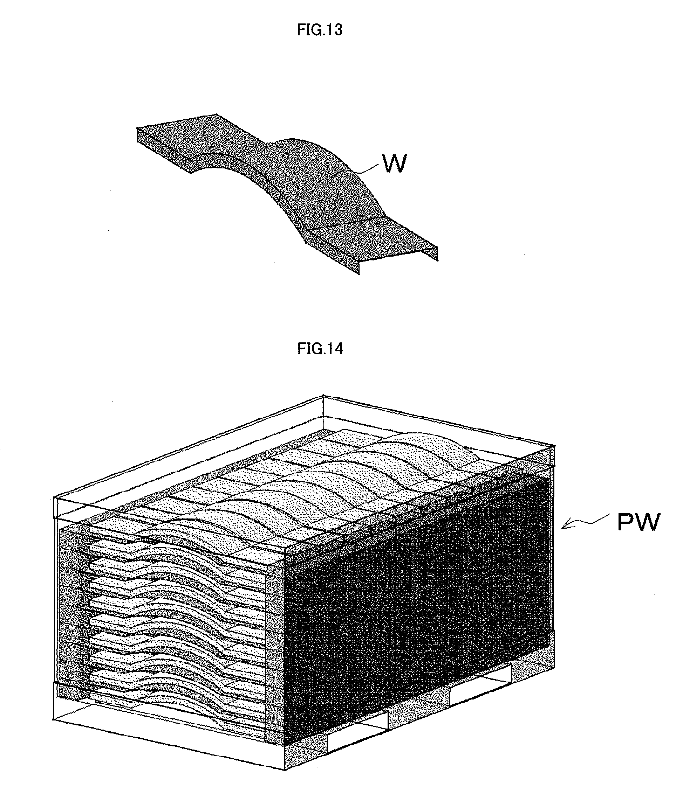

In the simulation of stowage, as shown in FIGS. 6, 10 and 11, the 3D image of the stowage members 6 used for the goods-stowed pallet PW may be displayed, based on the identification data (such as shapes) of various stowage members 6 stored in the database DB 2. Examples of the stowage members 6 are U-shaped guides, stoppers, square timbers, wooden crates, rushing belts, bolts and nuts, etc (see FIG. 4).

In the simulation of stowage, as shown in FIGS. 4 and 8, a list of images of the respective identification data (such as names, shapes, weights and used quantities) of the pallets P, the goods W and the stowage members 6 used for the goods-stowed pallet PW may be displayed with the image of the goods-stowed pallet PW. The simulation is based on the respective identification data (such as names, shapes and weights) of the various goods W, pallets P and stowage members 6 stored in the database DB2.

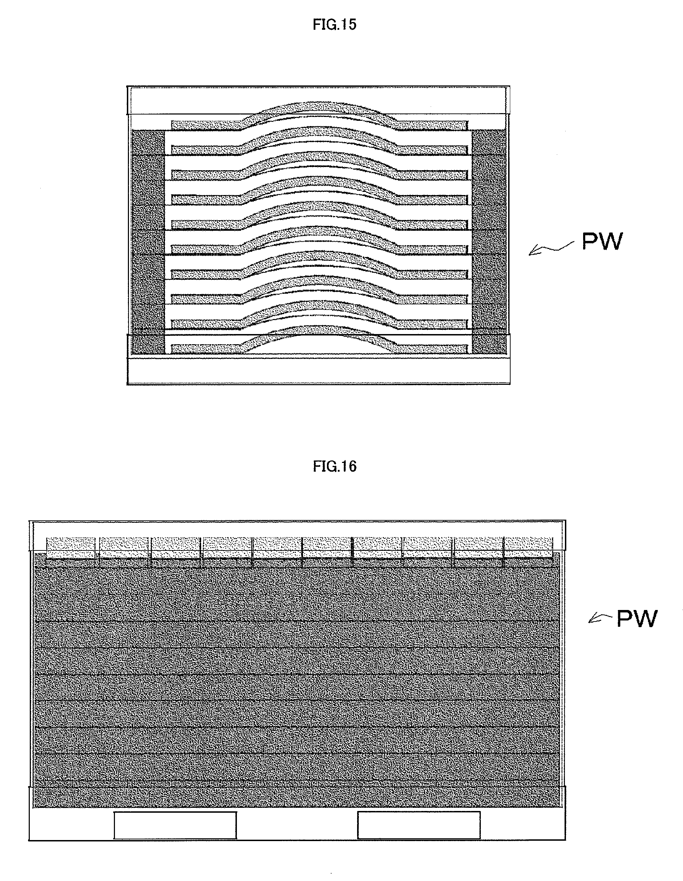

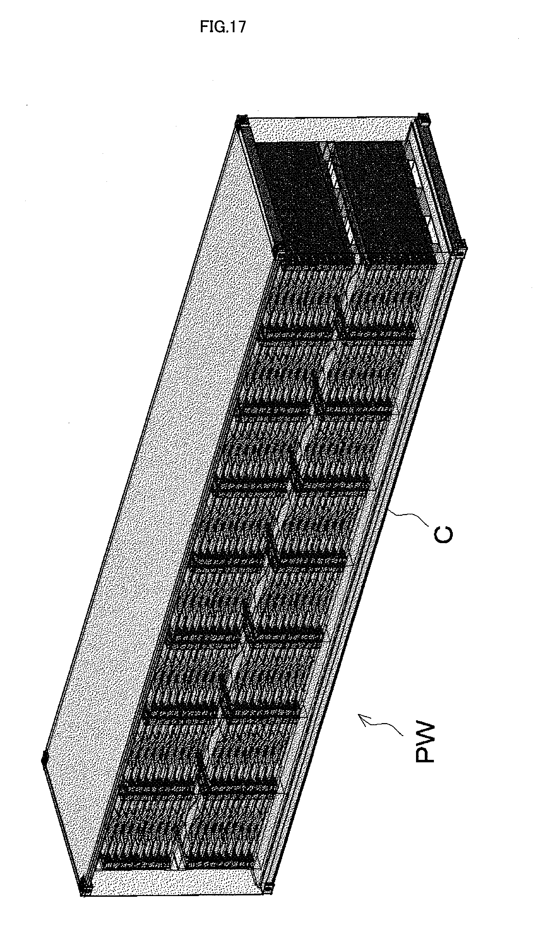

In the stowage data preparation device 1, as shown in FIGS. 13 through 17, simulation of stowing the goods W with special shapes (such as car bumper materials) may be performed. In this case, the pallet P is preferably made of cardboard. Further, buffer materials are used as the stowage members 6.

The stowage instruction data preparation unit 2c prepares stowage instruction data related to the goods-stowed pallet PW displayed by the goods-stowed pallet display unit 2b, based on the identification data stored in the database DB2.

The stowage instruction data is an image itself displayed by the goods-stowed pallet display unit 2b. Therefore, the stowage instruction data includes 2D and 3D images of the goods-stowed pallet PW, 2D and 3D images of the stowage members 6, and the respective identification data (such as names, shapes, weights and used quantities) of the pallets P, the goods W and the stowage members 6. The stowage instruction data further includes data showing a conveying direction of the goods-stowed pallet PW onto a container C (indicated by an arrow in FIGS. 3 and 9).
The stowage instruction data further includes duration of stowing work, stowage costs, position of the center of gravity of the goods-stowed pallet, gross weight, etc., hereinafter described.

The computer 2, as shown in FIG. 2, includes a stowage instruction data storage unit 2d as a program to execute stowage history processing.
The stowage instruction data storage unit 2d stores the stowage instruction data prepared by the stowage instruction data preparation unit 2c in the database DB1.

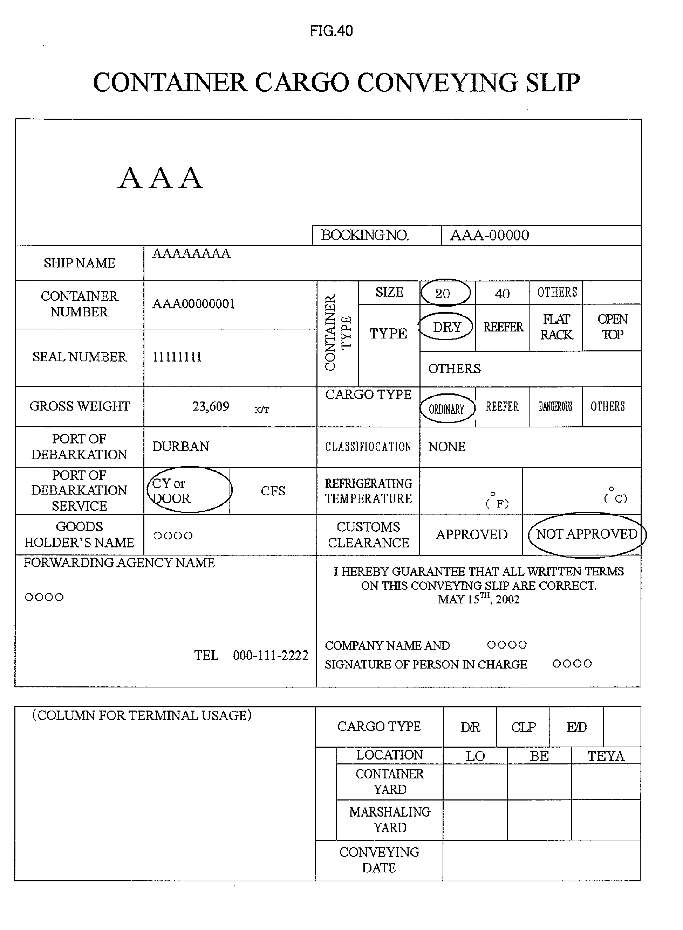

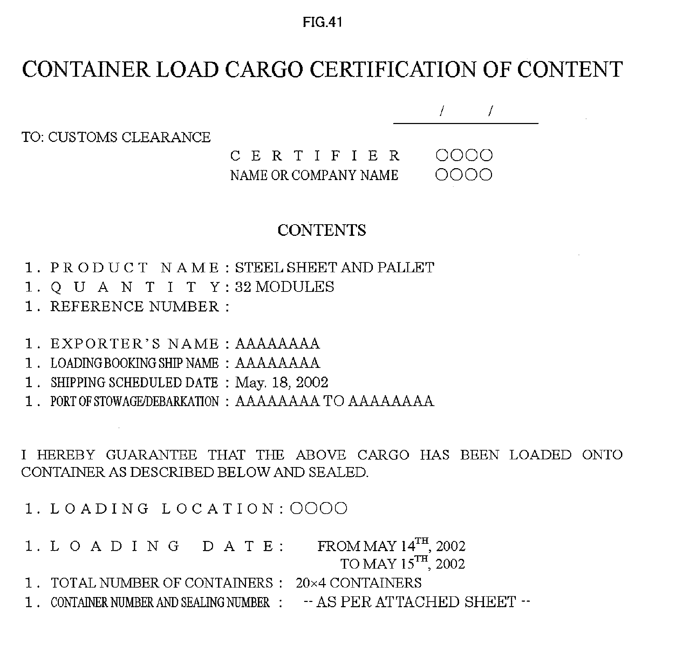

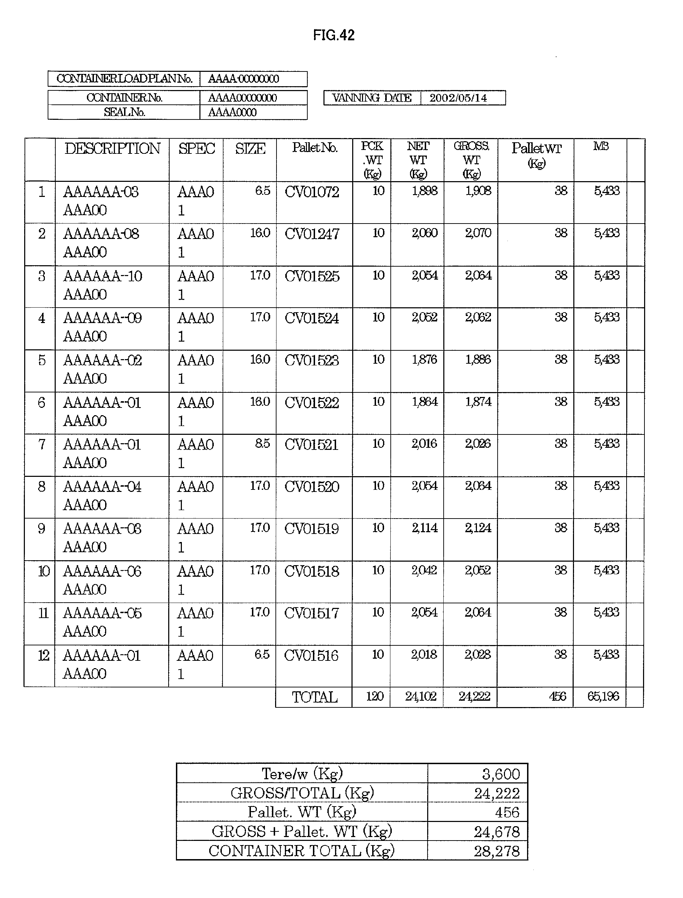

The computer 2, as shown in FIG. 2, includes a documentation preparation unit 2e, as a program to execute documentation preparation processing.
The documentation preparation unit 2e prepares documentation required for transporting containers, based on the stowage instruction data stored in the database DB1.
As the stowage instruction data includes the identification data (such as names, weights and used quantities) of the pallets P, the goods W and the stowage members 6 as described above, the documentation required for transporting containers, such as a container cargo conveying slip (see FIG. 40), a container load cargo certification of content (see FIG. 41), and a packing list (see FIG. 42) may be prepared automatically.

The computer 2, as shown in FIG. 2, includes a goods selection unit 2f as a program to execute goods selection processing.
The goods selection unit 2f selects the goods W to be stowed, based on the identification data (such as shapes) of the various goods stored in the database DB2.
The goods selection unit 2f displays various goods on the screen of the display device 3 in 3D, and selects the goods based on data arbitrarily input by a worker using the input unit.

The computer 2, as shown in FIG. 2, includes a stowing work duration calculation unit 2g.
The stowing work duration calculation unit 2g calculates duration of the stowing work of the goods-stowed pallet PW per container, based on the respective identification data (such as names and used quantities) of the pallets P, the goods W and the stowage members 6 used for the goods-stowed pallet PW per container, displayed by the goods-stowed pallet display unit 2b.
As shown by a virtual line in FIG. 4, when an individual estimated duration of work of the various goods and stowage members for a pallet is set in advance, the total duration of the stowing work may be calculated, by adding those estimated durations of work during the simulation of stowage. As a result, the above mode may be realized.

The computer 2, as shown in FIG. 2, includes a stowage costs calculation unit 2h.
The stowage costs calculation unit 2h calculates stowage costs of the goods-stowed pallet per container. The calculation is based on the identification data (such as names and used quantities) of the pallets P, the goods W and the stowage members 6 used for the goods-stowed pallet PW per container, displayed by the goods-stowed pallet display unit 2b, and the duration of the stowing work calculated by the stowing work duration calculation unit 2g.
As shown by a virtual line in FIG. 4, when an individual estimated costs (such as stowing work costs and packing materials costs) of various goods and stowage members for a pallet, and individual estimated usage costs of various pallets are set in advance, the total stowage costs may be calculated, by adding those estimated costs during the simulation of stowage. As a result, the above mode may be realized.

The computer 2, as shown in FIG. 2, includes a center-of-gravity position calculation unit 2i.
The center-of-gravity position calculation unit 2i calculates a position of the center of gravity of the goods-stowed pallet PW per container. The calculation is based on the respective identification data (such as shapes and weights) of the pallets P, the goods W and the stowage members 6 used for the goods-stowed pallet PW per container, displayed by the goods-stowed pallet display unit 2b. In the simulation of stowage, as shown in FIGS. 3 and 5, the position of the center of gravity of the goods-stowed pallet PW per container calculated by the center-of-gravity position calculation unit 2i is displayed on the screen of the display device 3, with the 3D image of the goods-stowed pallet PW. Accordingly, it is possible to easily check whether the position of the center-of-gravity is within an appropriate range or not during the simulation of stowage.

The stowage instruction data preparation unit 2c prepares the stowage instruction data including the position of the center of gravity of the goods-stowed pallet PW per container, calculated by the center-of-gravity position calculation unit 2i. This allows a worker, etc., to perform an actual stowing operation by checking whether the position of the center of gravity is within an appropriate range or not with ease.

The computer 2, as shown in FIG. 2, includes a center-of-gravity abnormality notification unit 2j.
The center-of-gravity abnormality notification unit 2j notifies abnormality of the center of gravity by outputting sound from a speaker 7, when the position of the center of gravity of the goods-stowed pallet PW per container calculated by the center-of-gravity position calculation unit 2i exceeds a predetermined range (range set in advance). The center-of-gravity abnormality notification unit 2j also notifies the abnormality by flashing the position of the center of gravity of the goods-stowed pallet PW per container, etc., on the screen of the display device 3, in addition to the sound output.

The computer 2, as shown in FIG. 2, includes a weight and volume calculation unit 2k.
The weight and volume calculation unit 2k calculates gross weight and/or volume of the goods-stowed pallet PW per container. The calculation is based on the respective identification data (such as shapes and weights) of the pallets P, the goods W and the stowage members 6 used for the goods-stowed pallet PW per container, displayed by the goods-stowed pallet display unit 2b. In the simulation of stowage, as shown in FIGS. 3 and 5, the gross weight (live load) and/or volume of the goods-stowed pallet PW per container calculated by the weight and volume calculation unit 2k, is displayed on the screen of the display device 3, with the 3D image of the goods-stowed pallet PW. Accordingly, it is possible to easily check whether the weight is within an appropriate range or not during the simulation of stowage.

The stowage instruction data preparation unit 2c prepares the stowage instruction data including the gross weight of the goods-stowed pallet PW per container calculated by the weight and volume calculation unit 2k. This enables a worker, etc., to perform the actual stowing operation by checking whether the gross weight and/or volume are within an appropriate range or not with ease.

The computer 2, as shown in FIG. 2, includes a weight and volume abnormality notification unit 21.
The weight and volume abnormality notification unit 21 notifies abnormality of weight and volume by outputting sound from the speaker 7, when the gross weight and/or volume of the goods-stowed pallet PW per container, calculated by the weight and volume calculation unit 2k, exceeds respective predetermined ranges (range set in advance). Also, the weight and volume abnormality notification unit 21 notifies the abnormality by flashing the gross weight and/or volume of the goods-stowed pallet PW per container on the screen of the display device 3, in addition to the sound output.

(2) Preparation of Stowage Instruction Data As shown in FIG. 1, shapes of the goods W are measured by three laser measurement systems 4, and the data on the goods' shapes are stored in the database DB2. The goods W to be stowed are selected on the screen of the display device 3 of the computer 2, based on the data on the goods' shapes. An appropriate module pallet P is determined corresponding to those goods W. Then, simulation of stowing the goods W onto the pallet P is performed on the screen of the display device 3. In the simulation of stowage, the goods-stowed pallet PW per container is displayed on the screen of the display device 3. When an optimum combination of stowage is determined, the stowage instruction data is prepared based on the goods-stowed pallet PW. The stowage instruction data is stored in the database DB1.

### (3) Conveying Operation onto Containers

Next, based on the stowage instruction data prepared by the stowage data preparation device, an actual (real) stowing operation of the goods W onto the pallet P is performed by a worker. Then, the goods-stowed pallet PW per container stowed by the operation is conveyed onto the container C all at once.

A carriage 20 and a conveying device 10 which are suitable for conveying the goods-stowed pallet PW onto the container C all at once will be described.

### (3a) Carriage

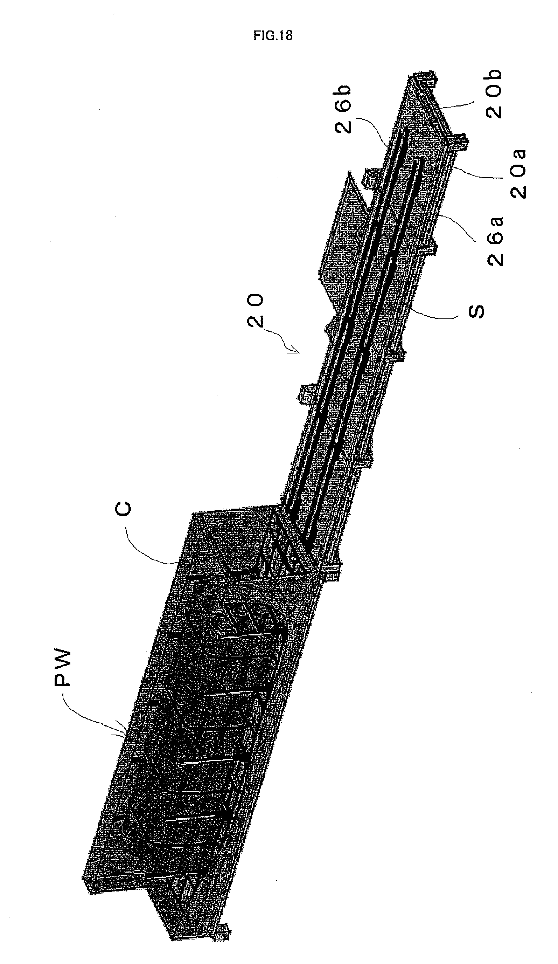

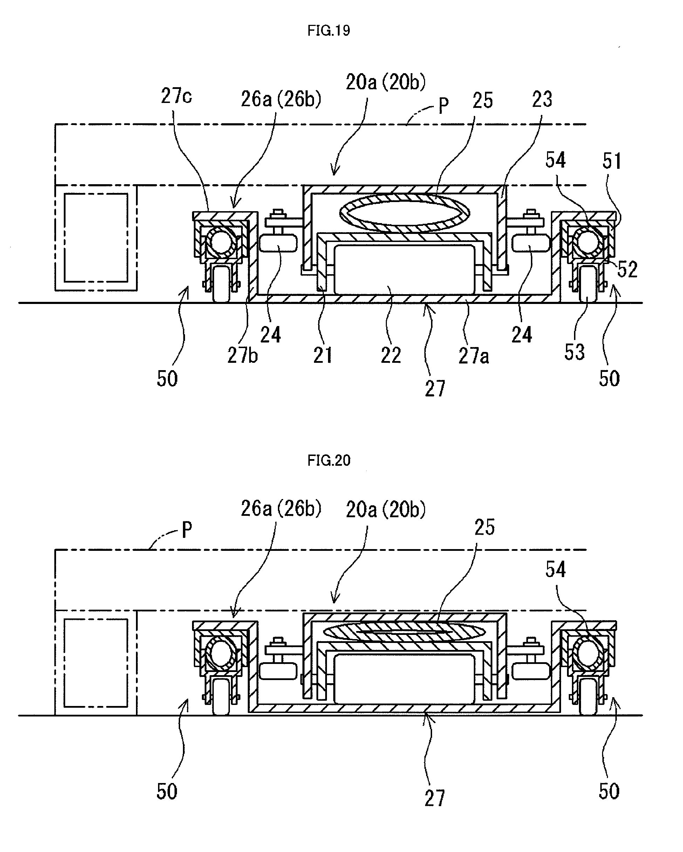

The carriage 20 will now be described. As shown in FIG. 18, an elongated symmetrical pair of carriages 20a and 20b is prepared on a stage S. The respective carriages 20a and 20b, as shown in FIGS. 19 and 20, include a base member 21 which rotatably supports a plurality of rotating rollers 22. The base member 21 elevatably supports a pallet supporter 23. The base member 21 and the pallet supporter 23 interpose an expanding/contracting member 25 in a tubular shape therebetween. The expanding/contracting member 25 is made of a woven-fabric jacket body coated with rubber therein, and expands/contracts by supplying/discharging compressed air. At both side surfaces of the pallet supporter 23, a plurality of guide rollers 24 are rotatably supported via a vertical axis.

On the stage S, as shown in FIG. 18, an elongated symmetrical pair of guide tools 26a and 26b is prepared, corresponding to the respective carriages 20a and 20b. The respective guide tools 26a and 26b, as shown in FIGS. 19 and 20, include a guide main body 27 with a U-shaped cross section. The guide main body 27 includes a flat floor 27a which the carriages 20a and 20b move thereon, vertical walls 27b arranged at both sides which are raised from both side edges of the floor 27a and also guide the guide rollers 24, and horizontal walls 27c arranged at both sides which extend horizontally toward outside from top edges of the respective vertical walls 27b.

A moving mechanism 50 is provided at under surface side of the horizontal wall 27c. The moving mechanism 50 has a base member 51 which is attached to the under surface side of each horizontal wall 27c. The base member 51 elevatably supports a supporter 52. The supporter 52 rotatably supports a plurality of moving rollers 53 via a horizontal axis. The moving rollers 53 move on the floor surface. The supporter 52 and the base member 51 interpose an expanding/contracting member 54 which is made of the same material as the expanding/contracting member 25. The guide main body 27 grounds on the floor surface due to a contraction of the expanding/contracting member 54 (see FIG. 19). And the guide main body 27 lifts from the floor surface due to an expansion of the expanding/contracting member 54 (see FIG. 20).

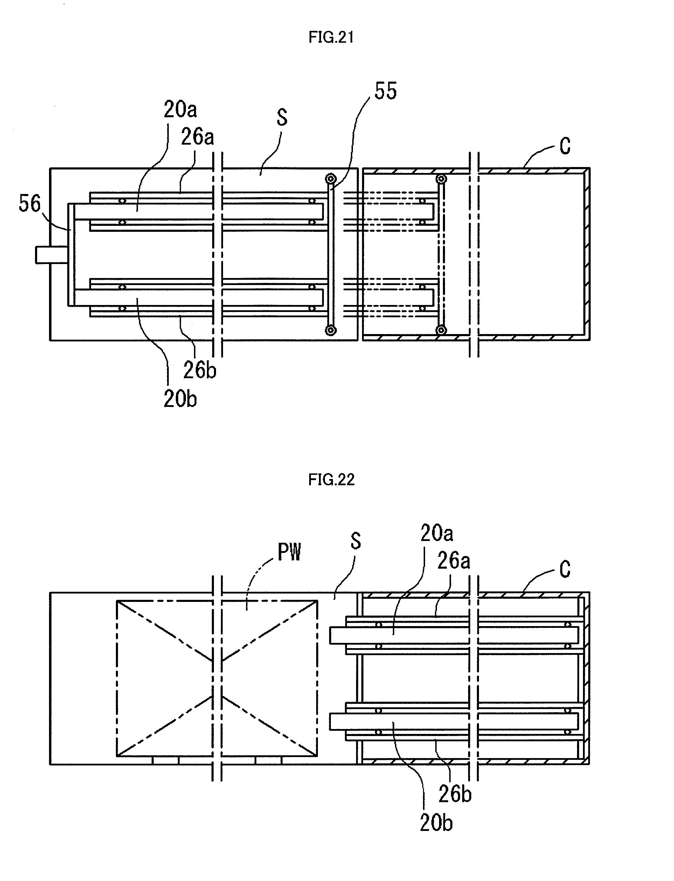

Next, a conveying action of the goods-stowed pallet PW onto the container C using the carriage 20 will be described.
As shown in FIG. 21, the respective guide tools 26a and 26b mounted with the respective carriages 20a and 20b are placed on the floor surface of the stage S. Next, a meandering prevention guide 55 is installed to a top edge of the respective guide tools 26a and 26b. Then, in the guide tools 26a and 26b, the expanding/contracting member 54 is expanded by supplying air thereto, thereby lifting the guide main body 27 from the floor surface of the stage S. At this state, a worker operates a loading unit 56 and pushes the respective guide tools 26a and 26b toward the side of the dry container C, by connecting the loading unit 56 to rear end sides of the respective carriages 20a and 20b.

As shown in FIG. 22, when the respective guide tools 26a and 26b are loaded in the dry container C, the guide main body 27 is placed on the floor surface of the dry container C, by discharging air from the expanding/contracting member 54 to contract. Then, using a crane, a forklift, etc., the goods-stowed pallet PW is placed on the floor surface of the stage S.

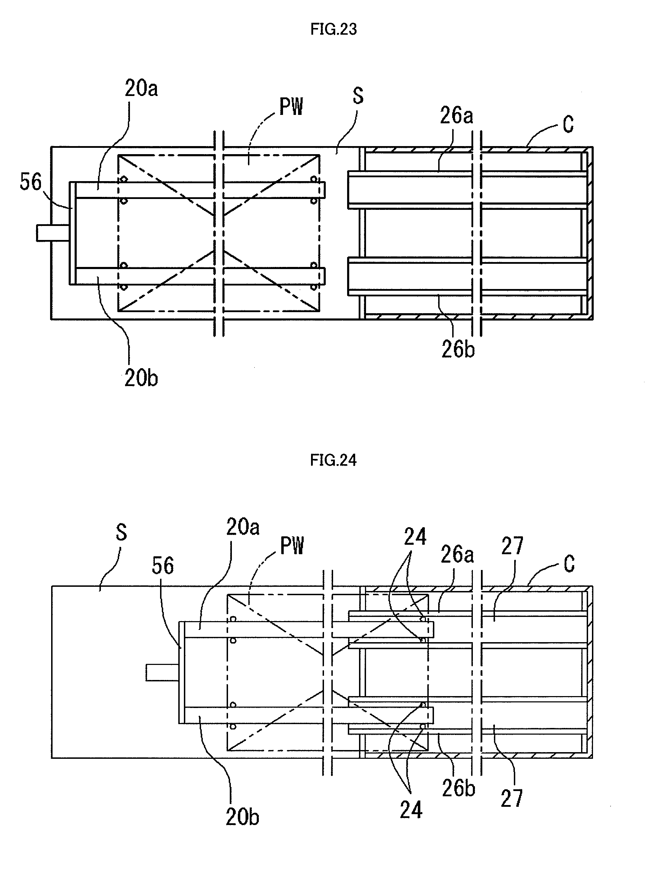

As shown in FIG. 23, pull out the respective carriages 20a and 20b from the respective guide tools 26a and 26b toward the side of the stage S. This allows the respective carriages 20a and 20b to enter a lower opening space of the goods-stowed pallet PW (see FIG. 20). At this state, in the respective carriages 20a and 20b, when the protruding member 25 is expanded by supplying air thereto, the goods-stowed pallet PW is lifted up from the floor surface of the stage S together with the pallet supporter 23. The worker operates the loading unit 56 and pushes the respective carriages 20a and 20b toward the side of the dry container C, by attaching the loading unit 56 to the rear end sides of the respective carriages 20a and 20b. At this point, as shown in FIG. 24, the guide rollers 24 of the respective carriages 20a and 20b are guided by the guide main body 27. As a result, the goods-stowed pallet PW is transported with good straight movement, together with the respective carriages 20a and 20b.

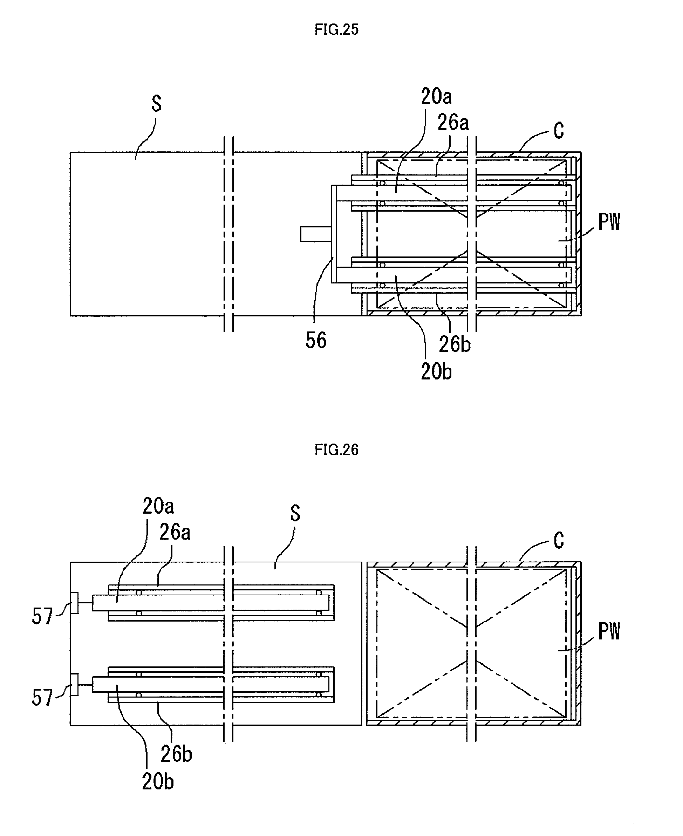

As shown in FIG. 25, when the goods-stowed pallet PW is loaded into the dry container C together with the respective carriages 20a and 20b, the air is discharged from the expanding/contracting member 25 to contract in the respective carriages 20a and 20b. The goods-stowed pallet PW is lowered together with the pallet supporter 23, and the goods-stowed pallet PW is placed on the floor surface of the dry container C. Then, as shown in FIG. 26, the respective guide tools 26a and 26b mounted with the respective carriages 20a and 20b are moved on the floor surface of the stage S by a winch 57, etc. As a result, a series of conveying operations is to be completed.

### (3b) Conveying Device

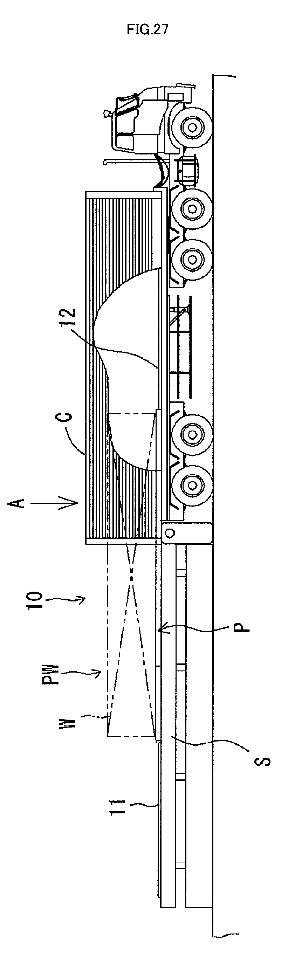

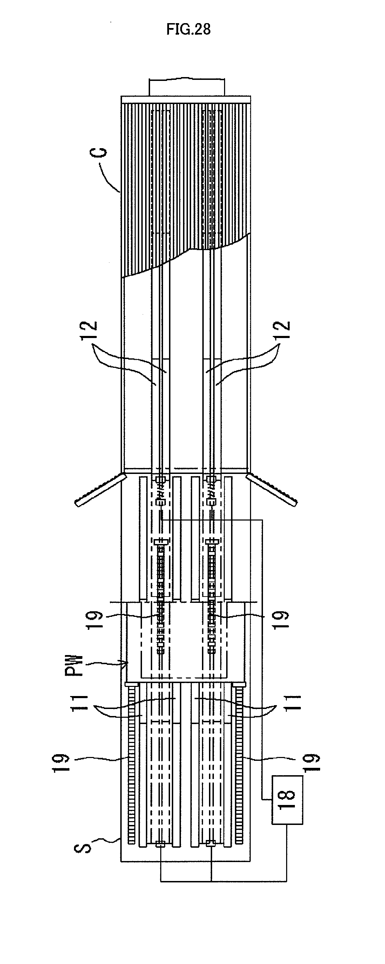

Next, the conveying device 10 will be described. The conveying device 10, as shown in FIGS. 27 and 28, includes a first elevating/sliding device 11 placed on the floor surface of the stage S, adjacent to an end opening of the dry container C positioned at a predetermined position. The conveying device 10 also includes a displaceable second elevating/sliding device 12 on the floor surface of the stage S and the dry container C.

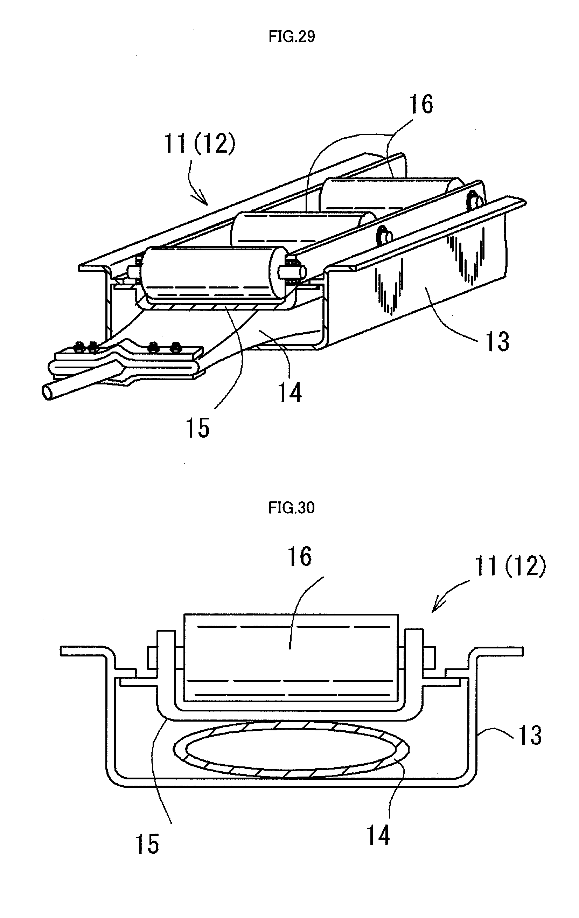

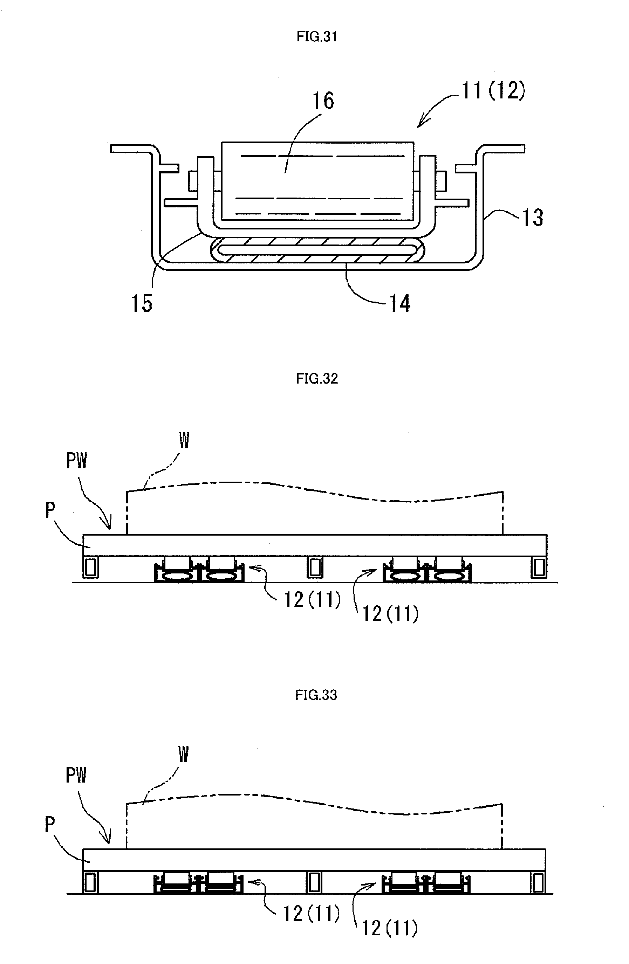

The first elevating/sliding device 11, as shown in FIGS. 29 through 31, includes a base member 13 having a U-shaped cross section grounded on the floor surface. At the bottom surface of the base member 13, an expansion member 14 in a tubular shape, made of a woven-fabric jacket body coated with rubber therein is laid on. At one end side of the expansion member 14, an air compressor 18 as an air supplier is connected thereto. The base member 13 elevatably supports a supporter 15 having a U-shaped cross section. The supporter 15 rotatably supports numerous rollers 16 which movably support the bottom surface forming the lower opening space of the pallet P in the horizontal direction. Therefore, with the expansion/contraction of the expansion member 14, the numerous rollers 16 move vertically with the supporter 15. As a result, the pallet P supported by these rollers 16 lifts (see FIG. 32) and grounds (see FIG. 33) against the floor surface.
As the structure of the second elevating/sliding device 12 is approximately the same as the first elevating/sliding device 11, the detailed description thereof will be omitted.

As shown in FIG. 28, a pair of two sets of push-pull mechanisms 19 is provided on the stage S. The push-pull mechanisms 19 horizontally move the pallet P, which is supported and lifted from the floor surface by the first and the second elevating/sliding devices 11 and 12, between the stage S and the dry container C. The push-pull mechanisms 19 also have a function of horizontally moving the second elevating/sliding device 12 between the stage S and the dry container C.

A conveying action of the goods-stowed pallet PW onto the container C using the conveying device 10 will now be described.
Before conveying, the first elevating/sliding device 11, the second elevating/sliding device 12 and the push-pull mechanisms 19 are prepared on the stage S. In the first and the second elevating/sliding devices 11 and 12, at this point, the expansion member 14 is being contracted, and the numerous rollers 16 are lowered.

Next, a truck is moved to position the dry container C mounted on a chassis of the truck at a predetermined position near the stage S. At this point, height levels of the floor surface of the stage S and the floor surface of the dry container C are approximately the same.
Then, using the push-pull mechanisms 19, the second elevating/sliding device 12 on the stage S is pushed toward the side of the dry container C, onto the floor surface of the dry container C.
By using a loading unit such as a crane, forklift, etc., the goods-stowed pallet PW is prepared on the first elevating/sliding device 11 on the stage S. At this point, the pallet P is grounded on the floor surface of the stage S, and the first elevating/sliding device 11 is loaded in the lower opening space of the pallet P.

In the first and the second elevating/sliding devices 11 and 12, the expansion member 14 is expanded by supplying air into the expansion member 14 by an action of the air compressor 18. This allows the numerous rollers 16 to move upward with the supporter 15, and the pallet P is lifted from the floor surface of the stage S.
Next, by the push-pull mechanisms 19, the pallet P being lifted is pushed towards the side of the dry container C. The pallet P, by moving horizontally, is passed to the second elevating/sliding device 12 from the first elevating/sliding device 11.
Thereafter, in the first and the second elevating/sliding devices 11 and 12, the air supplied to the expansion member 14 is stopped, and the expansion member 14 is contracted by discharging the air therefrom. The numerous rollers 16 are lowered with the supporter 15, thereby grounding the pallet P on the floor surface of the dry container C.
Then, using the push-pull mechanisms 19, the second elevating/sliding device 12 is pulled towards the side of the stage S, so as to be placed on the floor surface of the stage S. As a result, a series of conveying actions of the goods-stowed pallet PW onto the dry container C is completed.

### (4) Advantages of the Examples

According to the stowage data preparation device 1 of this example, the actual stowing operation is performed by repeating the simulation of stowing goods W onto the pallet P to be used per container, and based on the accurate stowage instruction data obtained from the result thereof. Therefore, a loading efficiency of the goods W onto the container C may be improved regardless of worker proficiency, and the stowing operation may be performed according to a planned schedule, even if the numerous types of goods W of differing shapes are stowed. Also, the total number of containers, required stowage members, duration of stowing work, etc., may be grasped at an early stage, thereby enabling to calculate accurate transportation costs. An optimum vanning schedule and a delivery schedule may also be planned. By planning the delivery schedule so that the goods required may be delivered in precisely the quantities required within a short time frame, it is possible to save a storage space of the goods of a shipping side such as a manufacturer, and a receiving side such as a distribution center. The costs may also be reduced. Particularly, a storage management according to a shipping time of received goods may be realized, thereby enabling to further save the storage space. As a result, planned container transportation may be realized.

Also, in this example, the stowage instruction data includes the 2D and 3D images of the goods-stowed pallet PW per container and the stowage members 6 used therefor, and the respective identification data (such as names, shapes, weights and used quantities) of the pallets P, the goods W and the stowage members 6 used for the goods-stowed pallet PW per container. Accordingly, it is possible for a worker to easily recognize the contents of stowing instructions related to a stowing position, a procedure, etc., of the goods W and the stowage members 6 for the pallets P, thereby enabling to perform more accurate stowing operation. The types, weights, quantities, etc., of the pallets P, the goods W and the stowage members 6 may be grasped with more accuracy, thereby enabling to grasp more accurate transportation costs.
This example includes a stowing work duration calculation unit and a stowage costs calculation unit. The duration of the stowing work and the stowage costs of the goods-stowed pallet per container may be displayed on the display device, or included in the stowage instruction data. Accordingly, it is possible to prepare more planned stowing work schedule and grasp more accurate transportation costs.
In this example, the stowage instruction data further includes the data showing the conveying direction of the goods-stowed pallet PW per container onto the container C. Accordingly, it is possible to perform the conveying operation of the goods-stowed pallet PW onto the container C with more certainty.
In this example, the simulation of stowage displays the position of the center of gravity of the goods-stowed pallet PW per container on the screen of the display device 3. Accordingly, it is possible to easily check whether the position of the center of gravity of the container C loaded with cargos is within a predetermined range or not. Particularly, as the abnormality of the center of gravity is notified when the position of the center of gravity of the goods-stowed pallet PW deviates from the predetermined range, the position of the center of gravity of the container C is prevented from exceeding the predetermined range with more certainty.
In this example, the simulation of stowage displays the gross weight and/or volume of the goods-stowed pallet PW per container on the screen of the display device 3. Accordingly, it is possible to easily check whether the gross weight and/or volume of the goods-stowed pallet per container are within a predetermined range or not. Also, the more accurate transportation costs may be calculated based on the gross weight and/or volume. Particularly, as the abnormality of the weight and volume is notified when the gross weight and/or volume of the goods-stowed pallet PW deviates from a predetermined range, the gross weight and/or volume of the goods-stowed pallet per container is prevented from exceeding a predetermined range with more certainty.
In this example, the prepared stowage instruction data is stored in the database DB1, thereby enabling to reuse the stowage instruction data when a stowage pattern is approximately the same. Accordingly, it is possible to keep the simulation of stowage to a minimum.
In this example, the documentation preparation unit 2e automatically prepares the documentation required for transporting containers, thereby enabling to prepare the documentation required for customs clearance, etc., at the same time. Accordingly, it is possible to prevent errors occurring in the copying, etc., and saves trouble of preparing the documentation.
In this example, the data on the goods' shapes are stored in the database DB2, thereby enabling to automatically select the goods W to be stowed from the stored data on the goods' shapes. Accordingly, it is possible to select the goods W to be stowed from a vast amount of goods with ease.
In this example, the shapes of the goods are measured by the laser measurement systems 4. Accordingly, it is possible to measure and acquire the shapes of the goods with ease.

### (5) Distribution Management System

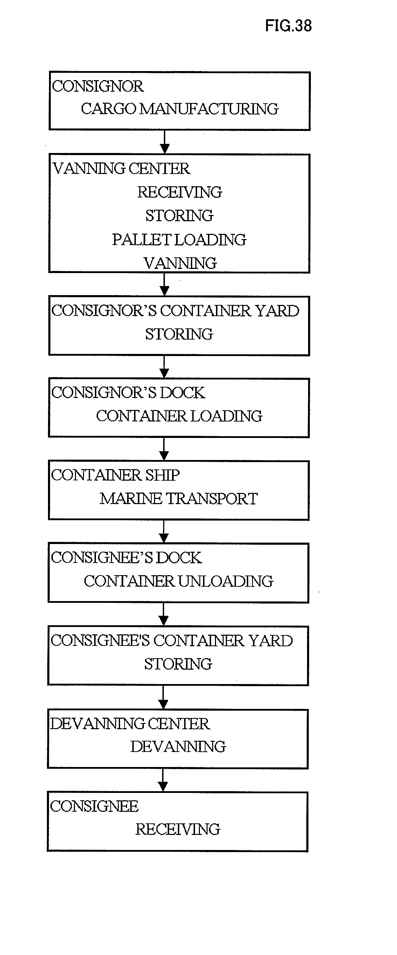

Next, a distribution management system 30 in this example will be described.
Transportation of the goods W (hereinafter, also referred to as cargo) in this example is performed with the following procedures. A consignor's cargo, as shown in FIG. 38, is delivered to a vanning center, stored, and then stowed on an empty pallet to make a goods-stowed pallet. Next, vanning is performed by stowing this goods-stowed pallet into a container. The container stowed with the goods-stowed pallet is delivered to a consignor's container yard, loaded in a container ship at a port, and transported to a dock of the consignee. At the dock of the consignee, the container is unloaded to a consignee's container yard, and delivered to a consignee's devanning center. At the devanning center, devanning to take out the goods-stowed pallets from the container is performed.

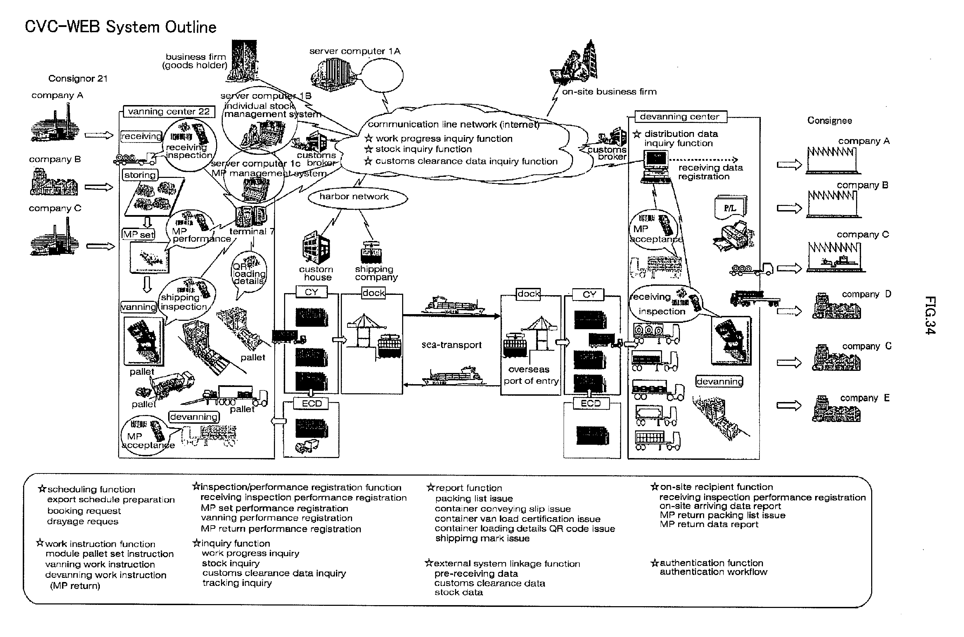

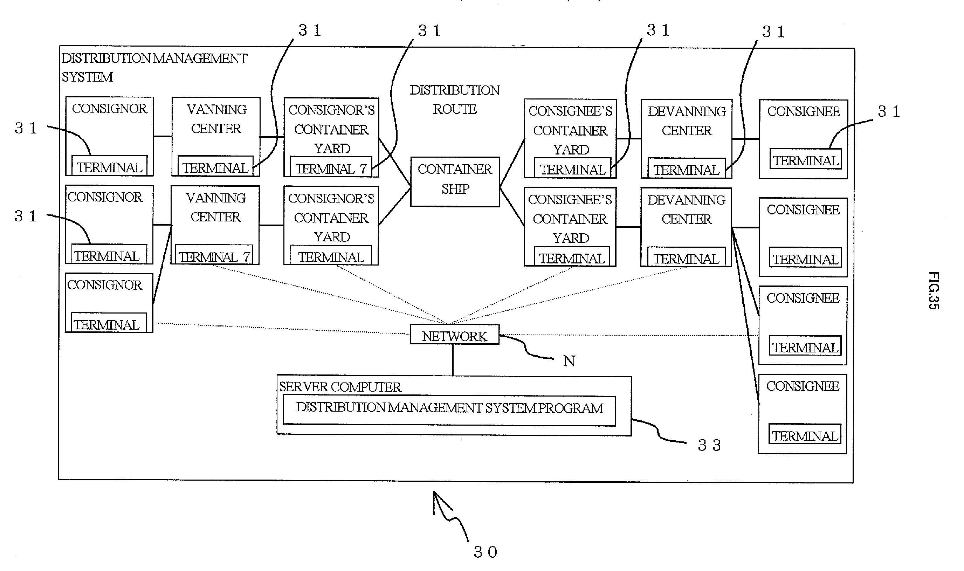

The distribution management system 30 in this example, as shown in FIGS. 34 and 35, includes a terminal 31 provided to each distribution base and a server computer 33 connected to the terminals 31 via a network N.

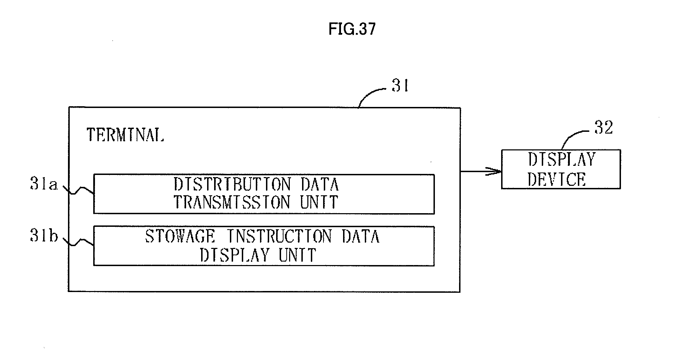

The terminal 31, as shown in FIG. 37, includes a distribution data transmission unit 31a and a stowage instruction data display unit 31b. A display device 32 is connected to the terminal 31.
The distribution data transmission unit 31a transmits distribution status data to a server computer 33. The distribution status data includes identification data of the goods and the position data of the distribution bases that are input by the terminal 31.
The stowage instruction data display unit 31b displays stowage instruction data transmitted from the server computer 33, hereinafter described, on the screen of the display device 32 or a printer (not shown).

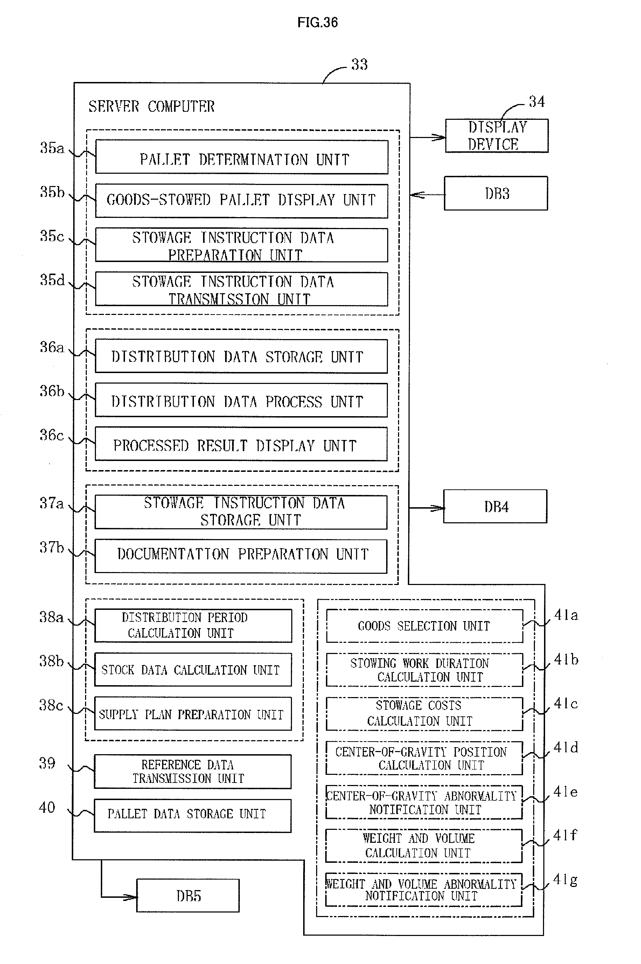

The server computer 33, as shown in FIG. 36, includes a pallet determination unit 35a, a goods-stowed pallet display unit 35b, a stowage instruction data preparation unit 35c, and a stowage instruction data transmission unit 35d, as programs to execute stowage data preparation processing. A display device 34 is connected to the computer 33.

The pallet determination unit 35a is substantially the same as the pallet determination unit 2a of the stowage data preparation device 1. The pallet determination unit 35a determines the shape and the quantity of the pallet P to be used per container, based on the identification data (such as shapes) of various goods W and pallets P stored in a database DB3 hereinafter described. The determination is made corresponding to the shapes, etc., of the goods W (to be stowed), by displaying various goods W to be stowed and various pallets P on the screen of the display device 34.

The goods-stowed pallet display unit 35b is substantially the same as the goods-stowed pallet display unit 2b of the stowage data preparation device 1. The goods-stowed pallet display unit 35b displays a 3D image of the goods-stowed pallet PW per container, based on the identification data (such as shapes) of the various goods W, pallets P and stowage members 6 stored in the database DB3 hereinafter described. Simulation of stowing the goods W onto the pallet P determined by the pallet determination unit 35a is displayed in 3D on the screen of the display device 34 (see FIGS. 2 through 17).

In the simulation of stowage, the displayed image of the goods-stowed pallet PW may be switched in the 3D image and a 2D image. And based on the identification data (such as shapes) of various stowage members 6 stored in the database DB3 hereinafter described, the stowage members 6 used for the goods-stowed pallet PW may be displayed in a 3D image. Also, a list of images of the respective identification data (such as names, shapes, weights, and used quantities) of the pallets P, the goods W and the stowage members 6 used for the goods-stowed pallet PW may be displayed, with the image of the goods-stowed pallet PW.

The stowage instruction data preparation unit 35c is substantially the same as the stowage instruction data preparation unit 2c of the stowage data preparation device 1. The stowage instruction data preparation unit 35c prepares stowage instruction data related to the goods-stowed pallet PW displayed by the goods-stowed pallet display unit 35b, based on the identification data stored in the database DB3 hereinafter described.

The stowage instruction data includes the 2D and 3D images of the goods-stowed pallet PW, the 2D and 3D images of the stowage members 6, and the identification data (such as names, shapes, weights, and used quantities) of the pallets P, the goods W and the stowage members 6. The stowage instruction data further includes data on a conveying direction of the goods-stowed pallet PW into the container C.
The stowage instruction data further includes durations of stowing work, stowage costs, positions of the center of gravity of the goods-stowed pallets, gross weights, etc., hereinafter described.

The server computer 33, as shown in FIG. 36, further includes a distribution data storage unit 36a, a distribution data process unit 36b and a processed result display unit 36c, as programs to execute the processing of distribution data process. The database DB3 is connected to the computer 33.

The distribution data storage unit 36a receives distribution status data transmitted from the terminal 31 and stores the data in the database DB3.
The distribution status data includes the identification data of the goods to be distributed, and the position data of the distribution base. Examples of the goods' identification data may be names, parts numbers, weights, shapes, materials, quantities, names of consignor, names of consignee, etc. In the database DB3, apart from the goods' identification data, the identification data of the various pallets and stowage members such as names, parts numbers, weights, shapes, materials, etc. are stored in advance.

The distribution data process unit 36b processes the distribution status data stored in the database DB3.
The processed result display unit 36c displays a processed result by the distribution data process unit 36b on the display device 34 or a printer (not shown).

The server computer 33, as shown in FIG. 36, further includes a stowage instruction data storage unit 37a and a documentation preparation unit 37b, as programs to execute documentation preparation processing. A database DB4 is connected to the server computer 33.
The stowage instruction data storage unit 37a stores the stowage instruction data prepared by the stowage instruction data preparation unit 35c in the database DB4.
The documentation preparation unit 37b prepares documentation required for transporting containers, based on the stowage instruction data stored in the database DB4 and the distribution status data stored in the database DB3.
As the stowage instruction data includes the identification data of the pallets, the goods and the stowage members, as described above, the required documentation for transporting containers such as a container cargo conveying slip (see FIG. 40), a container load cargo certification of content (see FIG. 41), a packing list (see FIG. 42), etc., may be prepared automatically.

The server computer 33, as shown in FIG. 36, further includes a distribution period calculation unit 38a, a stock data calculation unit 38b and a supply plan preparation unit 38c, as programs to execute supply plan processing.

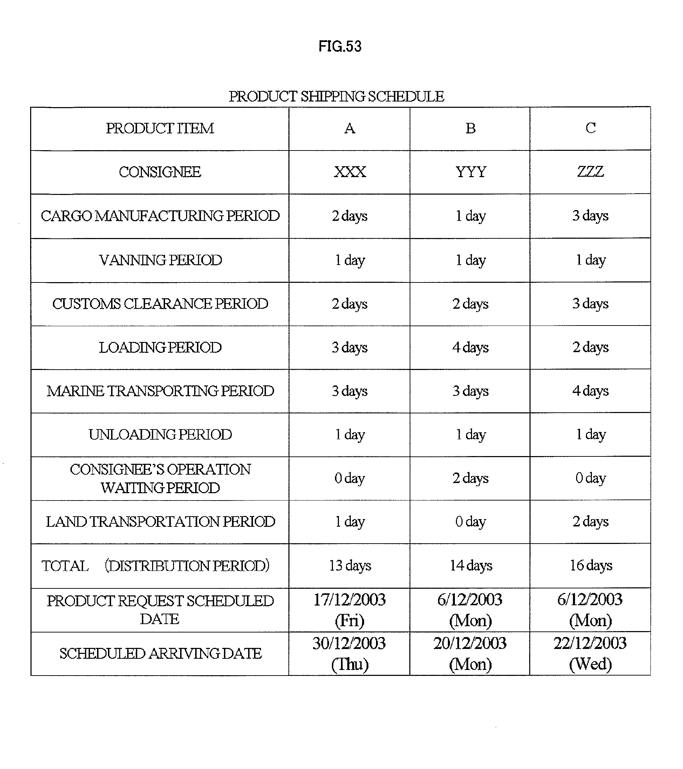

The distribution period calculation unit 38a calculates a distribution period (also referred to as lead time) of the goods W between respective distribution bases. The distribution period, as shown in FIG. 53, may be obtained by determining a distribution processing period required for respective distribution processing elements for cargo distribution, and adding these distribution processing periods. Examples of the respective distribution processing elements are a cargo manufacturing element, a vanning element, a customs clearance element, a loading element, a sea-transportation element, an unloading element, a consignee operation waiting element, a land-transportation element, etc.

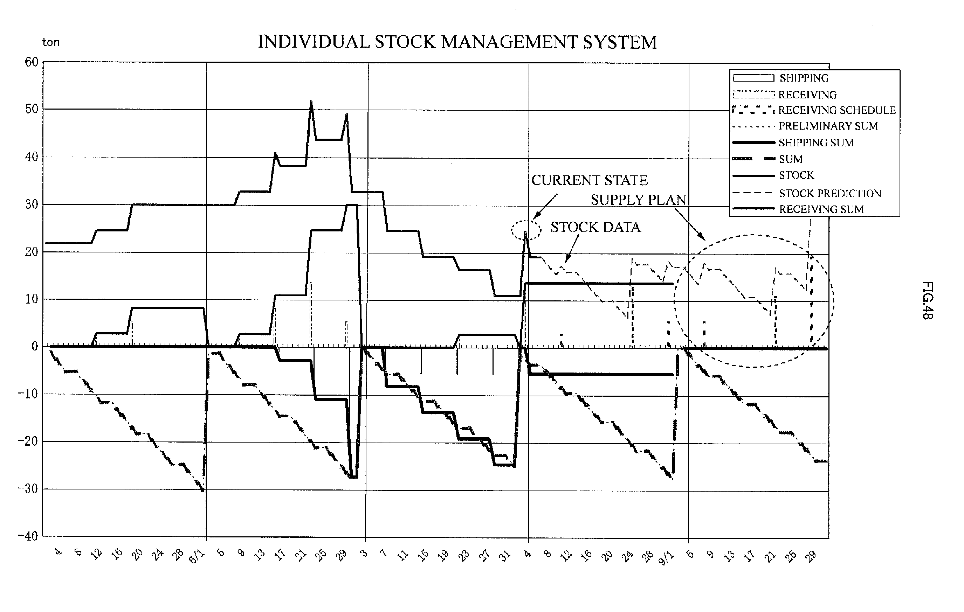

The stock data calculation unit 38b calculates stock data of the consignee's goods, according to distribution status data stored in the database DB3 and data (such as shipping data) related to the stock obtained from the consignee. The stock data, as shown in FIG. 48, is stock movement data, etc., within a certain period of time from present (such as approximately one month).
The goods being transported in the container may be grasped from the distribution status data. Also, the movement of the stock within a certain period of time from present may be grasped, based on the shipping data, etc., by the consignee.

The supply plan unit 38c prepares a supply plan based on the stock data calculated by the stock data calculation unit 38b and the distribution period calculated by the distribution period calculation unit 38a. The supply plan relates to the timing and the quantity of goods to be supplied to the consignee so that the amount of stock held by the consignee can be appropriate after a certain period of time from present as described above, and also within a certain period of time (such as approximately one month).

The server computer 33, as shown in FIG. 36, further includes a reference data transmission unit 39, as a program to execute reference processing.
The reference data transmission unit 39 transmits the processed result by the distribution data process unit 36b to the terminal 31 for reference, corresponding to a reference demand signal transmitted from the terminal 31 for reference connected to the network N.

The server computer 33, as shown in FIG. 36, further includes a pallet data storage unit 40, as a program to execute pallet processing. A database DB5 is connected to the server computer 33.

The pallet data storage unit 40 stores pallet data including a usage history of the pallet P determined by the pallet determination unit 35a, and a present position thereof in the database DB5.

Next, an operation of the distribution management system will be described.
The operation of the distribution management system in this example may be classified into cargo management, individual stock management, pallet management and data exchange.

### (5a) Cargo Management

As the consignor manufactures the goods, the type, quantity, etc., of the goods to be transported may be grasped in advance, before receiving the goods from the consignor. The data may be obtained in advance with any method, and the identification data may be prepared before receiving the goods. Also, an input is possible based on the identification data provided by the consignor (such as a bar code attached to a cargo). These data are transmitted to the server computer 33 by the distribution data transmission unit 31a of the terminal 31, and stored in the database DB3.

Based on the identification data of the goods W stored in the database DB3, a module pallet P is determined on the screen of the display device 34. The simulation of stowing the goods W onto the pallet P is performed on the screen of the display device 34. In the simulation of stowage, the goods-stowed pallet PW per container is displayed on the screen of the display device 34. After an optimum combination is determined, the stowage instruction data is prepared based on the goods-stowed pallet PW. The stowage instruction data is stored in the database DB4.

When the goods are received at the vanning center, inspection registration processing is performed. In the inspection registration processing, the identification data such as cargo specifications (types, weights, quantities, etc), names of consignor, names of consignee, etc., are input by the distribution status transmission unit 31a of the terminal 31, and stored in the database DB3 of the server computer 33.

The received goods are stowed on an empty pallet based on the stowage instruction data stored in the database DB4 to make the goods-stowed pallet PW. Then, using the distribution data transmission unit 31a of the terminal 31, the server computer 33 is notified that the vanning is ready. Also, the server computer 33 is notified that the empty pallet has been used. Thereafter, a vanning operation is performed. In the vanning operation, the goods-stowed pallet PW per container is stored in the container all at once, by using the conveying device 10 (see FIGS. 18 through 24) and the carriage 20 (see FIGS. 25 through 33).

The documentation preparation unit 37b prepares and outputs documentation required for distribution, such as a container cargo conveying slip, a packing list, etc., to clear customs, etc. For example, the container cargo conveying slip, as shown in FIG. 40, is prepared. The container cargo conveying slip states a name of ship owner, a name of ship, a type of container, a container number, gross weight, a port of debarkation, etc. Also, as shown in FIG. 42, the packing list listing descriptions and weights of products in the container, total weight, etc., is prepared.
These documentations may be obtained from the terminal provided at a vanning center, a consignor's container yard, etc. These documentations may not necessarily be prepared at the time of vanning. This is because the documentation may be submitted, if an output can be obtained at the vanning center, the consignor's container yard, etc., with an output instruction.

When the container stowed with the goods-stowed pallet PW arrives at the consignee, the arrival is notified to the server computer 33 using the terminal 31 of the consignee, and the identification data is updated.

### (5b) Individual Stock Management

In the individual stock management, stock movements of a shipping side and a receiving side may be grasped and estimated, thereby enabling to calculate an optimum quantity for the next vanning shipment.
Also, a simulation of local stock movement predictions by a shipper's shipment plan is performed based on demand prediction data and a stock performance report from the receiver, thereby enabling to prepare and execute the shipment plan to keep the local stock at an appropriate level. As a result, a structure enabling to deliver the goods required, in precisely the quantities required, at a required timing to a receiver's customer may be realized.

In a transportation route using the container ship, the container ship leaves a port at a set date and arrives at a consignee's port after a certain period of days. Therefore, a lag occurs in the transportation period. And even if the cargos are already forwarded, they may be stored in the container yard or in the ship. So even if the stock is calculated from the number of cargos in the vanning center and the number of stocks held by the consignee, an accurate stock status cannot be obtained unless the number of cargos being distributed and arriving sequentially are considered.
In stock prediction processing in this example, cargos group placed in the ship, etc., may be grasped as the stock of the vanning center, using the distribution status data. Also, the stock held by the consignee may be kept to the minimum, without running short.

The stock prediction, as shown in FIG. 48, is being output with a graph. The stock prediction is obtained by calculating an amount of stock held by the consignee in the past, the quantity being transported in the container ship, etc., and the stock movement estimated from the receiving date of the cargos manufactured according to the consignee's order.
In the stock prediction, the specific type of cargo or an overall stock at each consignee's warehouse may be obtained. By restricting the stock prediction to the specific type of cargo, the shortage of the cargo may be prevented. Further, by predicting the overall stock, the shipment plan to keep the stock to a minimum may be prepared.

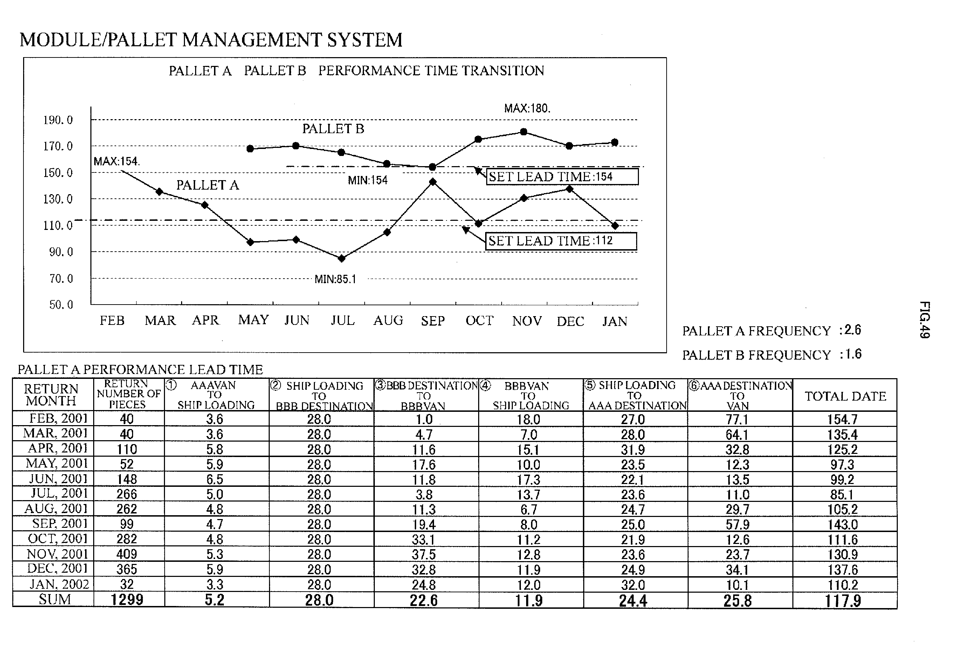

Based on the identification data of the goods, a chart related to a distribution period (lead time) may be prepared. The chart, as shown in FIG. 49, is a result calculated by the distribution period calculation unit. It shows distribution periods required for transportation between the respective distribution bases, based on the distribution status data stored in the database DB3. By obtaining such a graph listing distribution periods, a section having a problem with the distribution period may be grasped with ease.

As shown in dotted lines in FIG. 48, a result of calculating a shipping schedule is also included. The shipping schedule is obtained by calculating the distribution period from the present so as to keep the stock held by the consignee within a fixed range.
By obtaining a period required for a normal distribution as the distribution period, as shown in FIG. 53, the date of shipment may be obtained by calculating back the date when the cargos should arrive at the consignee. As a result, a shipment schedule may be configured.

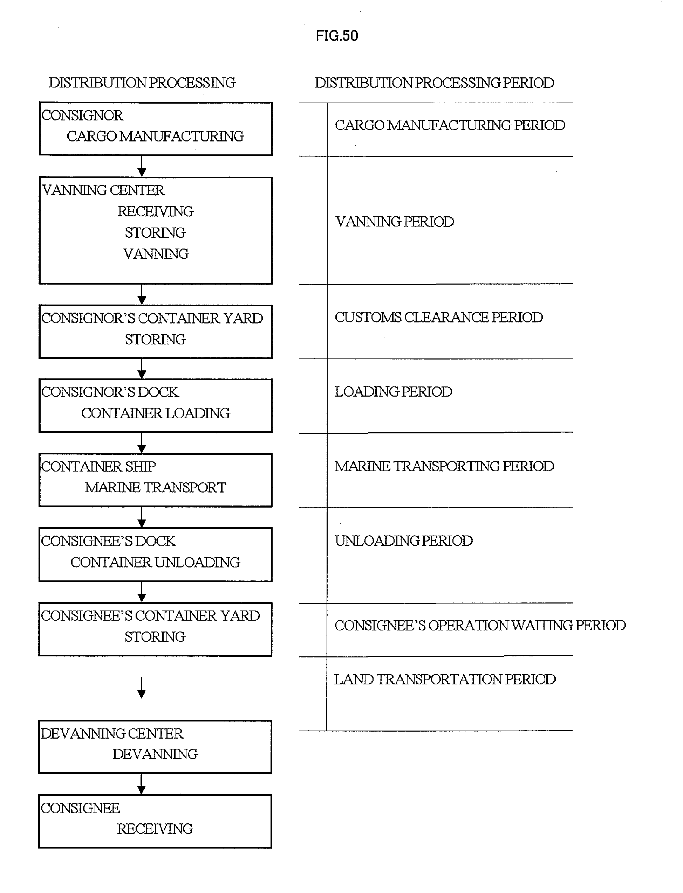

The distribution period is obtained by adding the distribution processing period required for processing the cargo distribution. Each distribution processing period, as shown in FIG. 50, may include a cargo manufacturing period, a vanning period, a customs clearance period, a loading period, a sea-transportation period, an unloading period, a consignee operation waiting period and a land-transportation period. These distribution processing periods may be shown in days or hours. Each distribution processing period is different according to a type of cargo to be shipped, and a consignee. There is also a case that the land transportation period does not exist, as the consignee's container yard and the devanning center are adjacent to each other, etc.

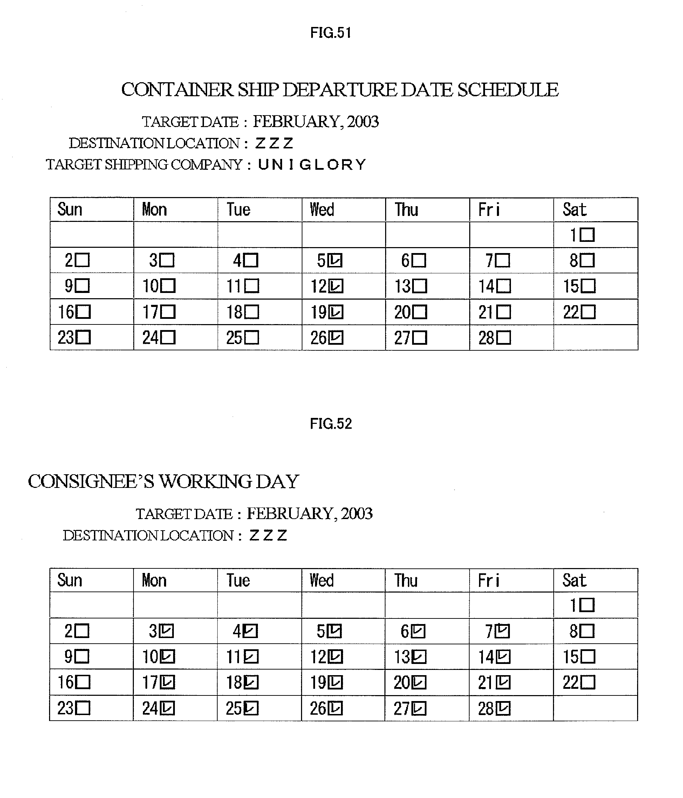

The cargo manufacturing period is a period required for the consignor to manufacture the cargo.
The processing period is a period required to load cargos onto pallets and vanning into containers at the vanning center.
The customs clearance waiting period is a period required to take necessary procedures for the cargo to clear the customs.
The containerizing period is a period required to wait before loading the cargo onto the container ship after customs clearance. The loading period also includes a period required for the container ship to arrive (for example, see FIG. 51) and a period required for loading.
The sea-transportation period is a period that the cargo is transported by sea in the container ship.
The unloading period is a period that the cargo is unloaded from the container ship.
The consignee operation waiting period is a period to wait the delivery so that the cargo group will arrive during the consignee's operating hours. This period, for example, as shown in FIG. 52, is calculated so that the cargo will arrive at a consignee's working day, by preparing the consignee's working schedule.
The land-transportation period is a period to transport the cargo from the container yard to the devanning center.
These distribution processing periods may be obtained in advance, by estimating the period, etc. As shown in FIG. 53, the distribution period may be obtained by calculating respective distribution processing periods and summing them up.

### (5c) Pallet Management

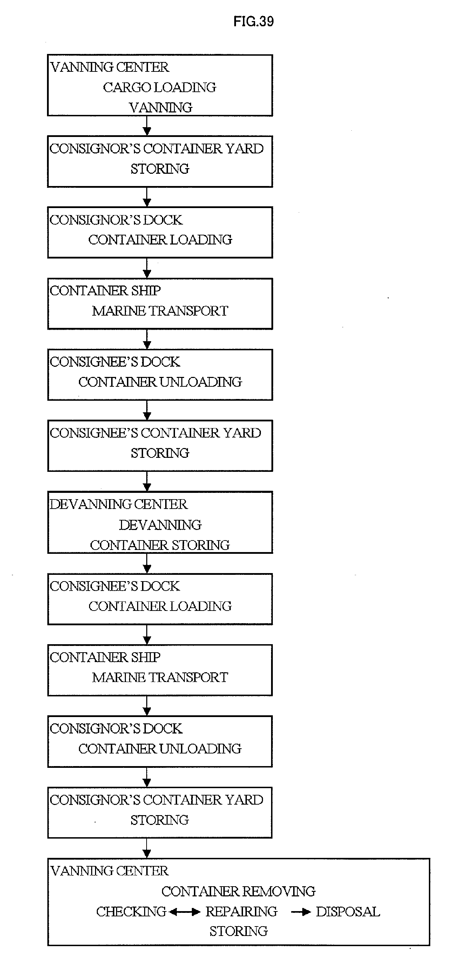

Pallet management manages pallets used for the distribution. Hereinafter, the pallet management will be described with reference to a flow chart related to handling of pallets, shown in FIG. 39.
The pallets are stored in the vanning center, provided with respective unique pallet numbers after being manufactured. The following management is performed according to the pallet number.
By connecting to the server computer 33 via the terminal 31, the pallet number is stored in the database DB5. The pallet is registered so as to indicate that it is a loadable empty pallet.

When the cargo is received from the consignor, the pallet data stored in the database DB5 is changed, so as to indicate that the pallet determined by the pallet determination unit 35a is in use.

After the goods loaded on the pallet are unloaded, the pallet is returned to the distribution base, such as the vanning center, to be stored. More specifically, the pallets are collectively loaded into one of the containers that have been used for normal cargo, and then the container is transported to the vanning center, etc. This is to reduce empty containers and increase the container usage rate.
At this point, the pallet data stored in the database DB5 is changed so as to indicate that the pallet is being returned. At the same time, the documentation required for customs clearance, etc., related to the pallet return is prepared.

The returned pallet is inspected whether it is reusable or not. At the same time, the pallet data stored in the database DB5 is changed so as to indicate that the pallet is under the inspection.
The pallet judged as reusable by the inspection is to be stored, after the pallet data stored in the database DB5 is changed so as to indicate that the pallet is empty. The pallet judged as reusable, if it is repaired, is stored after being repaired. At the same time, the fact that the pallet went through the repair is added to the pallet data stored in the database DB5.

The pallet judged as unusable is disposed, after the pallet data stored in the database DB5 is changed so as to indicate that the pallet is disposed.
By managing the pallets according to the pallet identification numbers, the number of pallets in use and the present number of pallets at each location may be grasped, enabling an optimum quantity management. As a result, appropriate costs may be assessed. Also, by recording histories on items that underwent repair, etc., quality deterioration of the pallet (such as description of damage, existence/non-existence of rust) may be grasped accurately. As a result, it may be utilized for manufacturing or upgrading new pallets.

### (5a) Data Exchange

In the data exchange, if the terminal 31 is connectable to the network N, distribution status data, etc, may be referred to by connecting to the server computer 33 and using the reference data transmission unit 39.
By connecting a computer that can execute a browser program to the server computer 33 as the terminal 31 (reference terminal), inquiry processing of the identification data may be performed.
In the inquiry processing, an inquirer is authenticated, and a reference range per container and cargo may be restricted according to the inquirer.

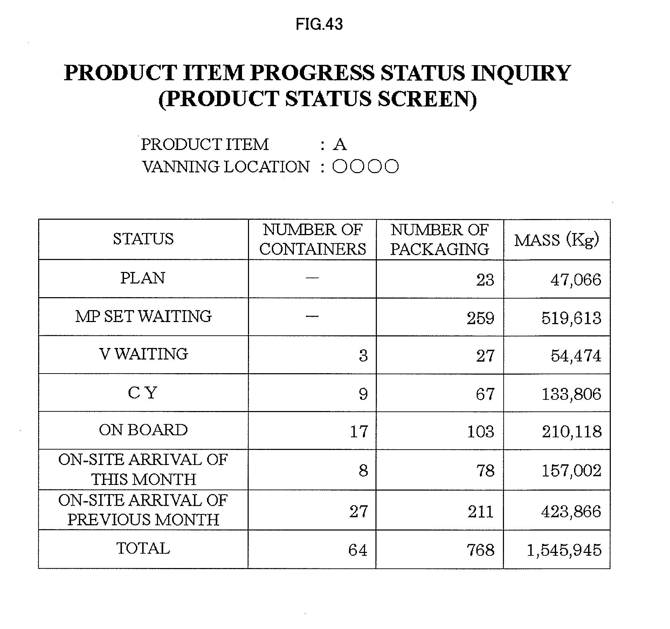

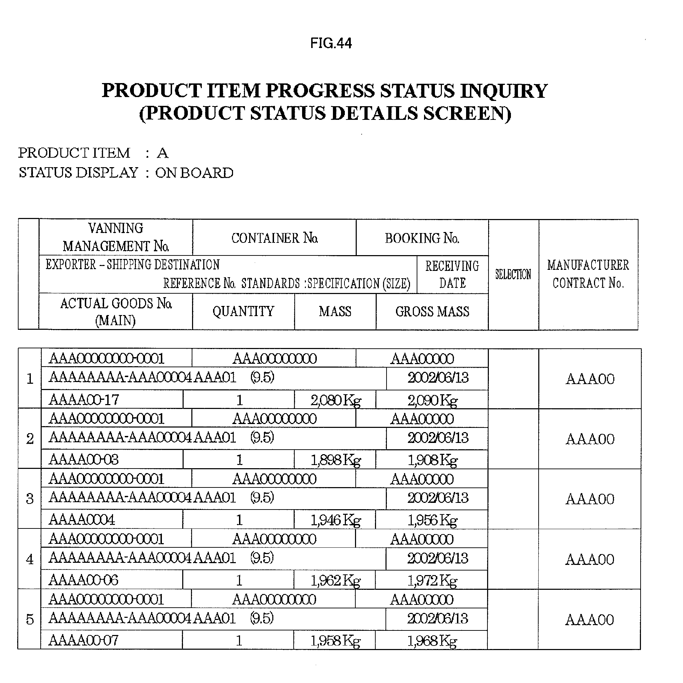

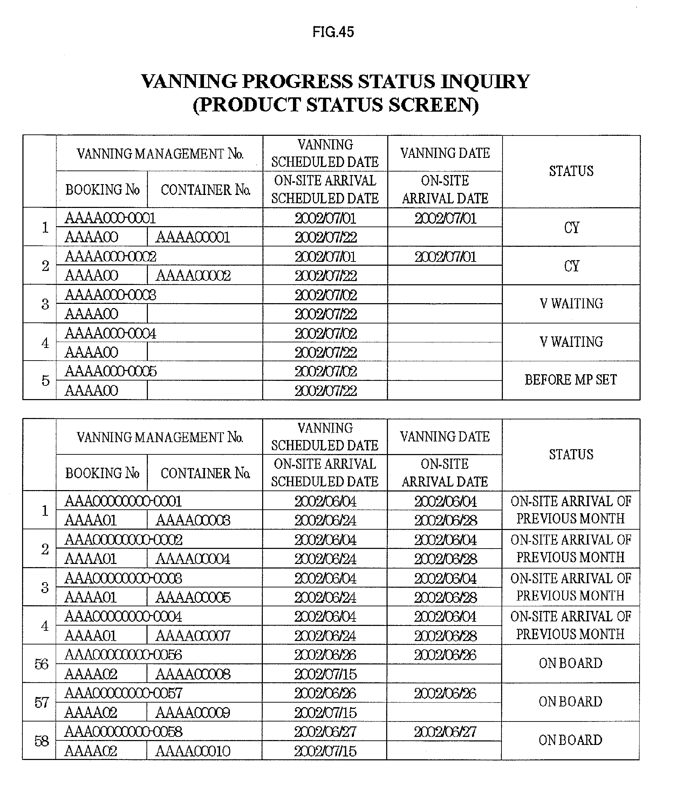

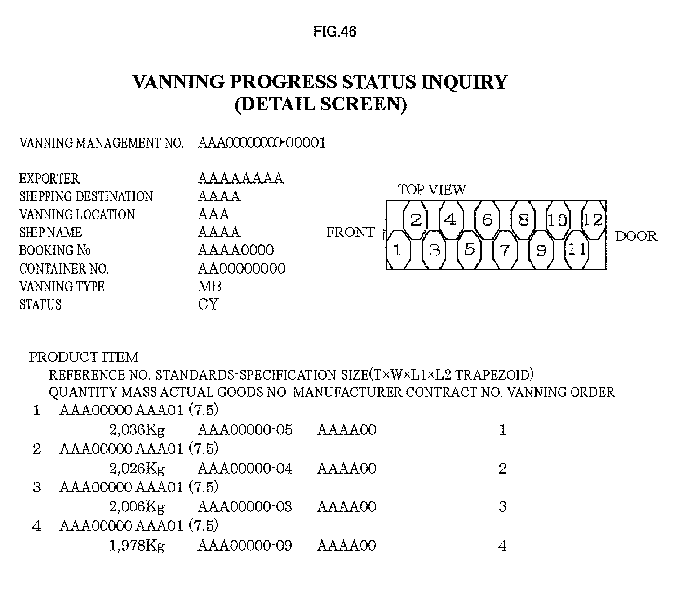

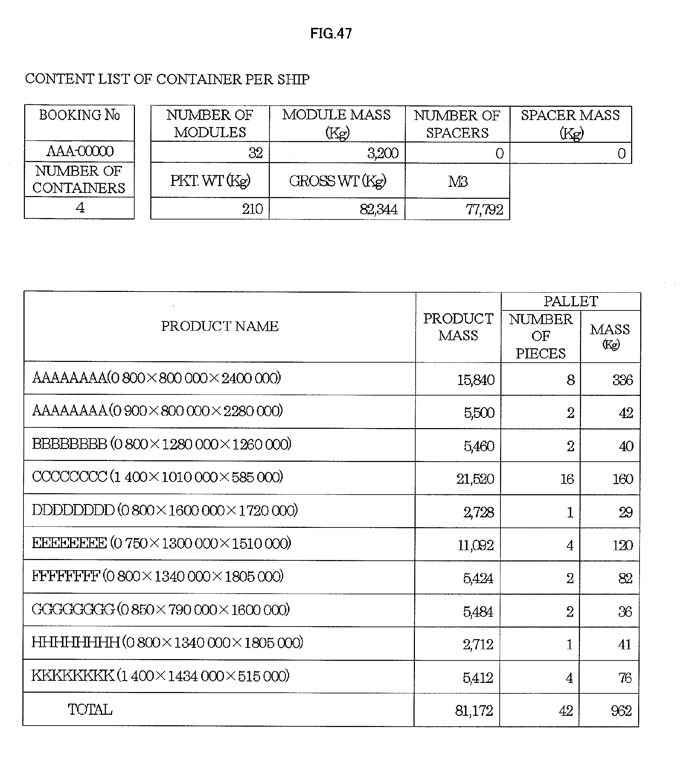

In the inquiry processing in this example, for example, as shown in FIG. 43, a progress status of the specific type of cargo in distribution may be obtained as a list, such as at which distribution base the cargo is staying, etc. Also, by selecting any of the distribution bases, as shown in FIG. 44, detailed data of the cargo staying at the distribution base may be obtained. As shown in FIG. 45, by inputting a type of cargo, the progress status of the corresponding cargo may be obtained. Further, as shown in FIG. 46, by specifying the container, details of the cargo loaded in the container may be obtained. Also, arrangement data identifying where in the container the cargo is positioned may be obtained.
By referring to these data, the consignee will easily be able to locate the container from which the required cargo should be taken out. These useful data is a processed result of the distribution status data by the distribution data process unit 36b.
In the inquiry processing in this example, as shown in FIG. 47, details of cargo in a certain progress status (in FIG. 47, on the container ship) may be obtained as a list. The details of the cargo are required when an inquiry is made to a specific distribution base, a container ship, etc.

In the data exchange processing, data is exchanged, by transmitting and receiving identification data, with other systems and terminals used by a consignor, consignee, etc., having no direct relationship with the distribution management system 30 in this example.
The identification data handled by the distribution management system 30 in this example has a lot in common with the cargo data already handled by the consignor or the consignee. Therefore, a trouble of inputting the cargo data once again at a cargo distribution management system side may be saved, by transferring the cargo data from the cargo management system, etc., used by the consignor or the consignee, through a communication line network, etc.
The system of the consignee side may grasp about the container and the cargo to be received, without inputting the data again, by receiving the identification data handled by the distribution management system. As a result, the efficiency in the receiving operation may be improved with ease.

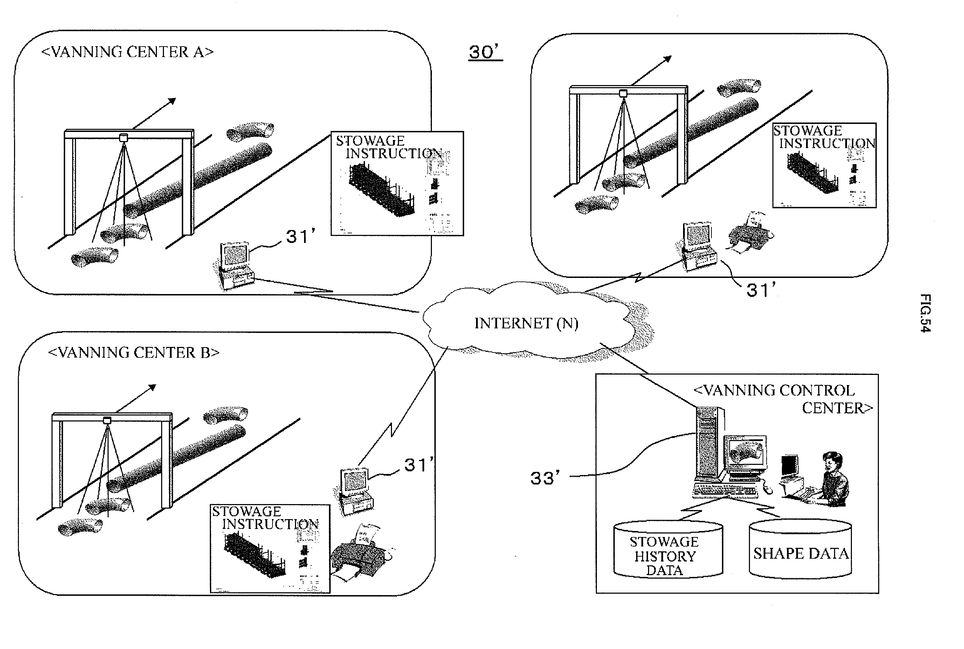

The present invention is not limited to the embodiments and examples described above but may be applied to various modifications according to the objects and purposes within the scope and spirit of the present invention. More specifically, in the present invention, the distribution management system 30 is exemplified which is suitable to perform the cargo management, the stock management, etc., for various distribution bases. However, the distribution management system is not limited to this, and as shown in FIG. 54, it may be a distribution management system which can perform an optimum stowage management for the vanning center as the distribution base. The distribution management system 30' includes terminals 31' provided respectively to a plurality of distribution bases (vanning centers), and a server computer 33' connected to the terminals 31'via the network N. The server computer 33' includes a pallet determination unit 35a' which determines the pallet to be used per container, based on the goods to be stowed. The server computer 33' also includes a goods-stowed pallet display unit 35b', which displays the goods-stowed pallet per container, by simulating stowing of the goods onto the pallet determined by the pallet determination unit on the screen of the display device. The server computer 33' also includes a stowage instruction data preparation unit 35c', which prepares the stowage instruction data based on the goods-stowed pallet per container displayed by the goods-stowed pallet display unit, and a stowage instruction data transmission unit 35d', which transmits the stowage instruction data prepared by the stowage instruction data preparation unit, to the terminal. The terminal 31' further includes a stowage instruction data display unit 31b', which receives and displays the stowage instruction data transmitted by the stowage instruction data transmission unit.

In the distribution management system 30 of the above-described example, as shown in a virtual line in FIG. 36, the server computer 33 may further include a goods selection unit 41a. The goods selection unit 41a selects goods to be stowed, based on the distribution status data stored in the database DB3 by the distribution data storage unit 36a.

The server computer 33 may include a stowing work duration calculation unit 41b. The stowing work duration calculation unit 41b is approximately the same as the stowing work duration calculation unit 2g of the stowage data preparation device 1. The stowing work duration calculation unit 41b calculates the duration of the stowing work of the goods-stowed pallet PW per container. The calculation is based on the respective identification data of the pallets P, the goods W and the stowage members 6 used for the goods-stowed pallet PW per container, displayed by the goods-stowed pallet display unit 35b.

The server computer 33 may include a stowage costs calculation unit 41c. The stowage costs calculation unit 41c is substantially the same as the stowage costs calculation unit 2h of the stowage data preparation device 1. The stowage costs calculation unit 41c calculates the stowage costs of the goods-stowed pallet per container. The calculation is based on the respective identification data of the pallets P, the goods W, the stowage members 6 used for the goods-stowed pallet PW per container, displayed by the goods-stowed pallet display unit 35b, and the duration of the stowing work calculated by the stowing work duration calculation unit 41b.

The server computer 33 may include a center-of-gravity position calculation unit 41d. The center-of-gravity position calculation unit 41d is substantially the same as the centre of gravity position calculation unit 2i of the stowage data preparation device 1. The center-of-gravity position calculation unit 41d calculates the position of the center of gravity of the goods-stowed pallet PW per container. The calculation is based on the respective identification data of the pallets P, the goods W and the stowage members 6 used for the goods-stowed pallet PW per container, displayed by the goods-stowed pallet display unit 35b.

The server computer 33 may include a center-of-gravity abnormality notification unit 41e. The center-of-gravity abnormality notification unit 41e is substantially the same as the center-of-gravity abnormality notification unit 2j of the stowage data preparation device 1. The center-of-gravity abnormality notification unit 41e notifies the abnormality of the center of gravity by outputting a warning sound from a speaker (not shown), or displaying the position of the center of gravity on the display device by flashing, etc., when the position of the center of gravity of the goods-stowed pallet PW per container calculated by the center-of-gravity position calculation unit 41d exceeds a predetermined range (range set in advance).

The server computer 33 may include a weight and volume calculation unit 41f. The weight and volume calculation unit 41f is substantially the same as the weight and volume calculation unit 2k of the stowage data preparation device 1. The weight and volume calculation unit 41f calculates the gross weight and/or volume of the goods-stowed pallet PW per container. The calculation is based on the respective identification data of the pallets P, the goods W and the stowage members 6 used for the goods-stowed pallet PW per container, displayed by the goods-stowed pallet display unit 35b.

The server computer 33 may include a weight and volume abnormality notification unit 41g. The weight and volume abnormality notification unit 41g is substantially the same as the weight and volume abnormality notification unit 21 of the stowage data preparation device 1. The weight and volume abnormality notification unit 41g notifies the abnormality of the center of gravity by outputting a warning sound from the speaker (not shown), or displays the position of the center of gravity on the display device by flashing, etc., when the weight and/or volume of the goods-stowed pallet PW per container calculated by the weight and volume calculation unit 41f exceeds a predetermined range (range set in advance).

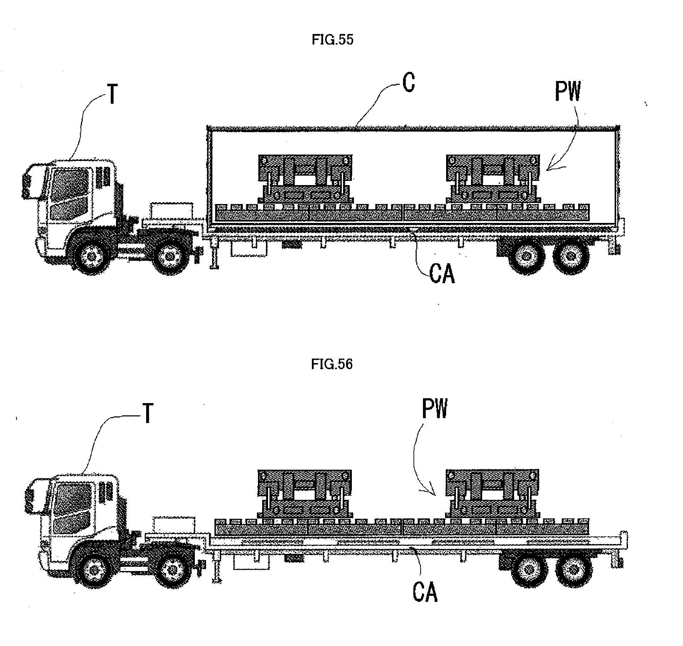

Examples of a mode of transporting the dry container C in the above-described example are land-transportation by a truck T (see FIG. 55) and railroads, sea-transportation by ships, air-transportation by airplanes, etc. In the above example, the dry container C is exemplified as an example of shipping receptacles. However, the shipping receptacle is not limited to this, and as shown in FIG. 56, a bed CA of the truck T loaded with the goods-stowed pallet PW, etc., may be used as an example of the shipping receptacles.

### [INDUSTREAL APPLICABILITY]

The present invention is utilized as a technique to stow goods onto a pallet per shipping receptacle. Particularly, it is optimally utilized as a technique to stow numerous types of goods having different shapes onto the pallet per shipping receptacle. Further, it is optimally utilized as a distribution management system for cargo transported in containers.

## Claims

1. A stowage data preparation device comprising:
a pallet determination unit determining a pallet to be used per shipping receptacle, based on goods to be stowed;
a goods-stowed pallet display unit displaying a goods-stowed pallet per shipping receptacle, by performing simulation of stowing goods onto the pallet determined by said pallet determination unit, on a screen of a display device; and
a stowage instruction data preparation unit preparing stowage instruction data related to the goods-stowed pallet per shipping receptacle, displayed by said goods-stowed pallet display unit.

2. The stowage data preparation device according to claim 1, wherein said goods-stowed pallet display unit displays a two-dimensional (2D) and/or three-dimensional (3D) images of said goods-stowed pallet per shipping receptacle, and a stowage member used for said goods-stowed pallet per shipping receptacle, on said screen of said display device, and said stowage instruction data preparation unit prepares stowage instruction data including the 2D and/or 3D images of said goods-stowed pallet per shipping receptacle, and said stowage member.

3. The stowage data preparation device according to claim 2, wherein said goods-stowed pallet display unit displays identification data of a pallet, goods and a stowage member used for said goods-stowed pallet per shipping receptacle on said screen of said display device, and said stowage instruction data preparation unit prepares the stowage instruction data further including the identification data of said pallet, goods and stowage member.

4. The stowage data preparation device according to claim 3, further comprising:
a stowing work duration calculation unit calculating duration of stowing work of said goods-stowed pallet per shipping receptacle based on the identification data of said pallet, goods and the stowage member used for said goods-stowed pallet per shipping receptacle, displayed by said goods-stowed pallet display unit.

5. The stowage data preparation device according to claim 4, further comprising:
a stowage costs calculation unit calculating stowage costs of said goods-stowed pallet per shipping receptacle based on the identification data of said pallet, goods and stowage member used for said goods-stowed pallet per shipping receptacle displayed by said goods-stowed pallet display unit, and the duration of the stowing work calculated by said stowing work duration calculation unit.

6. The stowage data preparation device according to claim 3, wherein said stowage instruction data preparation unit prepares the stowage instruction data further including data on a conveying direction of said goods-stowed pallet per shipping receptacle into a shipping receptacle.

7. The stowage data preparation device according to claim 3, further comprising:
a center-of-gravity position calculation unit calculating a position of the center of gravity of said goods-stowed pallet per shipping receptacle and/or per pallet based on the identification data of said pallet, goods and stowage member used for said goods-stowed pallet per shipping receptacle, displayed by said goods-stowed pallet display unit.

8. The stowage data preparation device according to claim 7, further comprising:
a center-of-gravity abnormality notification unit notifying abnormality when the position of the center of gravity of said goods-stowed pallet per shipping receptacle calculated by said center-of-gravity position calculation unit exceeds a predetermined range.

9. The stowage data preparation device according to claim 7, further comprising:
a center-of-gravity abnormality correction data production unit producing correction data for correcting the center-of-gravity abnormality, when the position of the center of gravity of said goods-stowed pallet per shipping receptacle calculated by said center-of-gravity position calculation unit exceeds a predetermined range.

10. The stowage data preparation device according to claim 3, further comprising:
a weight and volume calculation unit calculating a gross weight and/or volume of said goods-stowed pallet per shipping receptacle based on the identification data of said pallet, goods and stowage member used for said goods-stowed pallet per shipping receptacle, displayed by said goods-stowed pallet display unit.

11. The stowage data preparation device according to claim 10, further comprising:
a weight and volume abnormality notification unit notifying abnormality when the gross weight and/or volume of said goods-stowed pallet per shipping receptacle calculated by said weight and volume calculation unit exceeds a predetermined range.

12. The stowage data preparation device according to claim 11, further comprising:
a weight and volume abnormality correction data production unit producing correction data for correcting the weight and volume abnormality, when the gross weight and/or volume of said goods-stowed pallet per shipping receptacle calculated by said weight and volume calculation unit exceeds a predetermined range.

13. The stowage data preparation device according to claim 1, further comprising:
a stowage instruction data storage unit storing the stowage instruction data prepared by said stowage instruction data preparation unit.

14. The stowage data preparation device according to claim 13, further comprising:
a documentation preparation unit preparing documentation required for transporting a shipping receptacle, based on the stowage instruction data stored by said stowage instruction data storage unit.

15. The stowage data preparation device according to claim 1, further comprising:
an identification data storage unit storing identification data of goods to be stowed; and
a goods selection unit selecting goods to be stowed, based on the identification data stored by said identification data storage unit.

16. The stowage data preparation device according to claim 1, further comprising:
an identification data measurement unit measuring identification data of goods to be stowed.

17. The stowage data preparation device according to claim 1, wherein said pallet is standardized for a shipping receptacle.

18. A stowage data preparation method utilizing a stowage data preparation device, the method comprising:
determining a pallet to be used per shipping receptacle, based on goods to be stowed;
displaying a goods-stowed pallet per shipping receptacle, by performing simulation of stowing goods onto said pallet determined by the pallet determination unit on a screen of a display device; and
preparing stowage instruction data related to said goods-stowed pallet per shipping receptacle displayed by the goods-stowed pallet display unit.

19. A method for conveying goods into shipping receptacle, the method further comprising:
performing an actual stowing operation of goods onto a pallet, based on the stowage instruction data prepared by the stowage data preparation device according to claim 1; and
conveying a goods-stowed pallet per shipping receptacle stowed by such operation into a shipping receptacle all at once.

20. A distribution management system comprising:
terminals each provided to a plurality of distribution bases; and
a server computer connected to the terminals via a network;
said server computer comprising:
a pallet determination unit determining a pallet to be used per shipping receptacle, based on goods to be stowed;
a goods-stowed pallet display unit displaying a goods-stowed pallet per shipping receptacle, by performing simulation of stowing goods onto said pallet determined by said pallet determination unit on a screen of a display device;
a stowage instruction data preparation unit preparing stowage instruction data related to said goods-stowed pallet per shipping receptacle, displayed by said goods-stowed pallet display unit; and
a stowage instruction data transmission unit transmitting the stowage instruction data prepared by said stowage instruction data preparation unit to said terminals;
said terminals each comprising:
a stowage instruction data display unit receiving and displaying the stowage instruction data transmitted by said stowage instruction data transmission unit.

21. The distribution management system according to claim 20, wherein
said terminals each further comprising:
a distribution data transmission unit transmitting distribution status data including identification data of goods to be distributed, and position data of distribution bases to said server computer;
said server computer further comprising:
a distribution data storage unit receiving and storing the distribution status data transmitted from said distribution data transmission unit;
a distribution data process unit processing the distribution status data stored by said distribution data storage unit; and
a processed result display unit displaying a processed result by said distribution data process unit.

22. The distribution management system according to claim 21, wherein said server computer further comprising:
a receiving abnormality notification unit notifying an abnormality related to goods reception, based on the processed result by said distribution data process unit.

23. The distribution management system according to claim 21, wherein said server computer further comprising:
a stowage instruction data storage unit storing the stowage instruction data prepared by said stowage instruction data preparation unit; and
a documentation preparation unit preparing documentation required for transporting a shipping receptacle, based on the stowage instruction data stored in said stowage instruction data storage unit, and the distribution status data stored in said distribution data storage unit.

24. The distribution management system according to claim 21, wherein said server computer further comprising:
a distribution period calculation unit calculating a distribution period of goods being distributed between said respective distribution bases;
a stock data calculation unit calculating stock data of goods of a consignee, based on the distribution status data stored by said distribution data storage unit; and
a supply plan preparation unit preparing a supply plan to supply goods to the consignee so that an amount of stock held by the consignee stays within a predetermined range, based on the distribution period calculated by said distribution period calculation unit, and the stock data calculated by said stock data calculation unit.

25. The distribution management system according to claim 21, wherein said server computer further comprising:
a reference data transmission unit receiving a reference demand signal transmitted from said terminals, and transmitting the processed result by said distribution data process unit to said terminals, corresponding to the reference demand signal.

26. The distribution management system according to claim 20, wherein said server computer further comprising:
a pallet data storage unit storing pallet data including a usage history and a present position of said pallet determined by said pallet determination unit.

27. The distribution management system according to claim 20, wherein said terminals each further comprising:
an identification data measurement unit measuring identification data of goods to be stowed.

28. A computer-readable memory medium storing a program for causing a computer to operate as the stowage data preparation device according to claim 1.

29. A program for causing a computer to operate as the stowage data preparation device according to claim 1.

30. A computer-readable memory medium storing a program for causing a computer to operate as the distribution management system according to claim 20.

31. A program for causing a computer to operate as the distribution management system according to claim 20.
